(19)

**Europäisches Patentamt**
**European Patent Office**
**Office européen des brevets**

(11) **EP 4 129 493 B1**

(12) **EUROPEAN PATENT SPECIFICATION**

(45) Date of publication and mention
of the grant of the patent:
**23.07.2025 Bulletin 2025/30**

(21) Application number: **21774320.2**

(22) Date of filing: **24.03.2021**

(51) International Patent Classification (IPC):
**B05D 1/36** (2006.01)  **B05D 3/02** (2006.01)
**B05D 5/06** (2006.01)  **B05D 7/24** (2006.01)
**C09D 5/00** (2006.01)  **C09D 133/00** (2006.01)
**C09D 161/28** (2006.01)  **C09D 175/04** (2006.01)
**C09D 201/06** (2006.01)  **C09D 7/61** (2018.01)

(52) Cooperative Patent Classification (CPC):
(C-Sets available)
**C08G 18/6229; B05D 5/066; B05D 7/572;**
**B05D 7/574; C08F 220/1804; C08L 61/28;**
**C09D 5/36; C09D 7/61; C09D 7/62; C09D 7/70;**
**C09D 161/28; C09D 175/04; C09D 201/06;**
B05D 3/02; B05D 2202/10; (Cont.)

(86) International application number:
**PCT/JP2021/012120**

(87) International publication number:
**WO 2021/193683 (30.09.2021 Gazette 2021/39)**

(54) **METHOD FOR FORMING MULTI-LAYER COATING FILM**

VERFAHREN ZUM HERSTELLEN EINES MEHRSCHICHTIGEN ÜBERZUGFILMS

PROCÉDÉ DE FORMATION D'UN FILM DE REVÊTEMENT MULTICOUCHE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **25.03.2020 JP 2020055123**

(43) Date of publication of application:
**08.02.2023 Bulletin 2023/06**

(73) Proprietor: **KANSAI PAINT CO., LTD.**
**Amagasaki-shi, Hyogo-ken 661-8555 (JP)**

(72) Inventors:
• **SAKAI, Kenji**
**Hiratsuka-shi, Kanagawa 254-8562 (JP)**
• **NARITA, Nobuhiko**
**Hiratsuka-shi, Kanagawa 254-8562 (JP)**

(74) Representative: **Müller-Boré & Partner**
**Patentanwälte PartG mbB**
**Friedenheimer Brücke 21**
**80639 München (DE)**

(56) References cited:
CA-A1- 3 076 175       CA-A1- 3 081 165
JP-A- 2014 180 599    JP-A- 2018 062 634
JP-A- 2019 195 791

**(Cont. next page)**

(52) Cooperative Patent Classification (CPC): (Cont.)
C08K 3/013; C08K 7/00; C08K 2003/0812

C-Sets
**C08F 220/1804, C08F 220/20, C08F 212/08,**
**C08F 220/06;**
B05D 2420/02, B05D 2601/06;
B05D 2420/02, B05D 2601/08

## Description

Technical Field

The present invention relates to a method for forming a multilayer coating film.

Background Art

The purpose of applying paints is mainly to protect materials and impart an excellent appearance to materials. For industrial products, excellent appearance, particularly "color and texture," is important from the standpoint of enhancing their product appeal. Although there are various textures for industrial products desired by consumers, vivid color with luster such as metals (luster such as metals is referred to below as "metallic luster") has recently been desired in the field of automobile exterior panels, automobile components, home appliances, and the like.

Metallic luster is a texture characterized in that the coated plate near the specular reflection light (highlight) looks shiny, and the oblique direction (bottom) of the coated plate looks dark. That is, metallic luster is a texture with a large luminance difference between the highlight region and the bottom region.

Patent Literature 1 discloses a method for forming a multilayer coating film having a metallic base coating film, which is formed by a metallic base paint containing a color pigment and an effect pigment, and a colored base coating film formed by a colored base paint containing a color pigment, wherein a transparent clear coating film formed by a transparent clear paint is formed on at least the top layer, the brightness L* value of the metallic base coating film is 60 or less, and the light transmittance of the colored base coating film at a wavelength of 400 nm or more to 700 nm or less is between 30% or more to 50% or less.

Citation List

Patent Literature

PTL 1: J P2007-167720A

Summary of Invention

Technical Problem

The coating film obtained in Patent Literature 1 is poor in vividness and metallic luster. Application of paint requires imparting excellent appearance and protecting materials, and thus excellent coating film performance such as high water resistance is required.

Accordingly, an object of the present invention is to provide a method for forming a multilayer coating film that is capable of forming a vivid multilayer coating film having metallic luster and exhibiting high coating film performance.

Solution to Problem

The present invention includes the subject matter defined in the following items.
1. A method for forming a multilayer coating film, comprising the following steps (1) to (5):

(1) applying a color paint (W) containing a hydroxy-containing resin (w1) and a color pigment (w2) to a substrate to form a colored coating film;
(2) applying an effect pigment dispersion (X) to the colored coating film obtained in step (1) to form an effect first base coating film, wherein the effect pigment dispersion (X) contains a hydroxy-containing resin (x1) and an effect pigment (x2), and the content of the effect pigment (x2) in the effect pigment dispersion (X) is within a range of 15 to 80 parts by mass, based on 100 parts by mass of the total solids content in the effect pigment dispersion (X);
(3) applying a transparent colored second base paint (Y) containing a hydroxy-containing resin (y1) and a color pigment (y2) to the effect first base coating film obtained in step (2) to form a transparent colored second base coating film;
(4) applying a clear paint (Z) to the transparent colored second base coating film obtained in step (3) to form a clear coating film, wherein the clear paint (Z) contains a hydroxy-containing acrylic resin (z1) and a polyisocyanate compound (z2), and the polyisocyanate compound (z2) contains an aliphatic triisocyanate compound (z2-1) having a molecular weight within a range of 200 to 350 as at least one of the polyisocyanate compound (z2); and
(5) heating a multilayer coating film containing the effect first base coating film, transparent colored second base coating film, and clear coating film formed in steps (2) to (4) to simultaneously cure the multilayer coating film.

2. The method for forming a multilayer coating film according to Item 1, wherein the color paint (W) is an aqueous paint.

3. The method for forming a multilayer coating film according to Item 1 or 2, wherein the color paint (W) further contains a melamine resin and/or a blocked polyisocyanate compound.

4. The method for forming a multilayer coating film according to any one of Items 1 to 3, wherein the effect pigment dispersion (X) is an aqueous paint.

5. The method for forming a multilayer coating film according to Item 4, wherein in the effect pigment dispersion (X), the hydroxy-containing resin (x1) contains a water-dispersible hydroxy-containing acrylic resin (x111).

6. The method for forming a multilayer coating film according to any one of Items 1 to 5, wherein the effect pigment (x2) contains a vapor-deposition aluminum flake pigment, and the content of the vapor-deposition aluminum flake pigment is within a range of 15 to 55 parts by mass, based on 100 parts by mass of the total solids content in the effect pigment dispersion (X).

7. The method for forming a multilayer coating film according to any one of Items 1 to 5, wherein the effect pigment (x2) contains an aluminum flake pigment, and the content of the aluminum flake pigment is within a range of 45 to 80 parts by mass, based on 100 parts by mass of the total solids content in the effect pigment dispersion (X).

8. The method for forming a multilayer coating film according to any one of Items 1 to 7, wherein the transparent colored second base paint (Y) is an aqueous paint.

9. The method for forming a multilayer coating film according to any one of Items 1 to 8, wherein the transparent colored second base paint (Y) further contains a melamine resin and/or a blocked polyisocyanate compound.

10. The method for forming a multilayer coating film according to any one of Items 1 to 9, wherein in the clear paint (Z), the equivalent ratio (NCO/OH) of the total mol of the isocyanate groups in the polyisocyanate compound (z2) to the total mol of the hydroxy groups in the hydroxy-containing acrylic resin (z1) is within a range of 1.1 to 2.5.

11. The method for forming a multilayer coating film according to any one of Items 1 to 10, wherein the effect first base coating film has a film thickness within a range of 0.02 to 7 μm.

12. The method for forming a multilayer coating film according to any one of Items 1 to 11, wherein the transparent colored second base coating film has a film thickness within a range of 3 to 30 μm.

13. The method for forming a multilayer coating film according to any one of Items 1 to 12, wherein in step (2), the effect pigment dispersion (X) is applied to the heat-cured colored coating film.

14. The method for forming a multilayer coating film according to any one of Items 1 to 12, wherein in step (2), the effect pigment dispersion (X) is applied to the uncured colored coating film, and in step (5), the colored coating film, effect first base coating film, transparent colored second base coating film, and clear coating film formed in steps (1) to (4) are simultaneously heated to cure a multilayer coating film containing these four coating films all at once.

Advantageous Effects of Invention

According to the method for forming a multilayer coating film of the present invention, a vivid multilayer coating film having metallic luster and exhibiting excellent coating film performance, such as water resistance, can be formed.

Description of Embodiments

The method for forming a multilayer coating film of the present invention includes the following steps (1) to (5):

(1) applying a color paint (W) containing a hydroxy- containing resin (w1) and a color pigment (w2) to a substrate to form a colored coating film;

(2) applying an effect pigment dispersion (X) to the colored coating film obtained in step (1) to form an effect first base coating film, wherein the effect pigment dispersion (X) contains a hydroxy-containing resin (x1) and an effect pigment (x2), and the content of the effect pigment (x2) in the effect pigment dispersion (X) is within a range of 15 to 80 parts by mass, based on 100 parts by mass of the total solids content in the effect pigment dispersion (X);

(3) applying a transparent colored second base paint (Y) containing a hydroxy-containing resin (y1) and a color pigment (y2) to the effect first base coating film obtained in step (2) to form a transparent colored second base coating film;

(4) applying a clear paint (Z) to the transparent colored second base coating film obtained in step (3) to form a clear coating film, wherein the clear paint contains a hydroxy-containing acrylic resin (z1) and a polyisocyanate compound (z2), and the polyisocyanate compound (z2) contains an aliphatic triisocyanate compound (z2-1) having a molecular weight within a range of 200 to 350 as at least one of the polyisocyanate compound (z2); and

(5) heating a multilayer coating film containing the effect first base coating film, transparent colored second base coating film, and clear coating film formed in steps (2) to (4) to simultaneously cure the multilayer coating film.

Step (1)

According to the method for forming a multilayer coating film of the present invention, a color paint (W) containing a hydroxy-containing resin (w1) and a color pigment (w2) is first applied to a substrate to form a colored coating film.

Substrate

The substrate to which the color paint (W) is applied is not particularly limited. Examples include exterior panels of vehicle bodies, such as automobiles, trucks, motorcycles, and buses; automobile components, such as bumpers; and exterior panels of home appliances, such as mobile phones and audio equipment. Of these, vehicle body exterior panels and automobile components are preferable.

The materials for these substrates are not particularly limited. Examples include metallic materials, such as iron, aluminum, brass, copper, tin plate, stainless steel, galvanized steel, steel plated with a zinc alloy (Zn-Al, Zn-Ni, Zn-Fe); plastic materials, such as polyethylene resins, polypropylene resins, acrylonitrile-butadiene-styrene (ABS) resins, polyamide resins, acrylic resins, vinylidene chloride resins, polycarbonate resins, polyurethane resins, epoxy resins, and mixtures of these resins, and various types of fiber reinforced plastics (FRP); inorganic materials, such as glass, cement, and concrete; wood; textile materials, such as paper anc cloth. Of these materials, metallic materials and plastic materials are preferable. The substrate may be a mixture of the metallic material and the plastic material.

The substrate may be a metallic material mentioned above or, e.g., a vehicle body formed from a metallic material mentioned above that has been subjected to a surface treatment, such as a phosphoric acid salt treatment, chromate treatment, or composite oxide treatment. The substrate may also be a metallic material, vehicle body, on which one or more coating films have been formed thereon.

The substrate to which a coating film has been formed may be a base material that has been subjected to a surface treatment as necessary, and on which an undercoating film is formed. The undercoating film is generally formed for the purpose of imparting, for example, anticorrosion and adhesion to the base material; and masking properties (sometimes referred to as "undercoating masking properties") for the unevenness of the base material surface. As undercoating paints for forming such undercoating films, those that are themselves known can be used. For example, from the standpoint of anticorrosion etc., of the formed multilayer coating film, it is preferable to apply a cationic or anionic electrodeposition paint to a conductive base material, such as metal. The use of the cationic electrodeposition paint is preferred from the standpoint of chipping resistance, adhesion.

After the application of the undercoating paint, the undercoating paint may be cured by heating, blowing, or like means; or may be dried to an extent that does not cause curing. When a cationic or anionic electrodeposition paint is used as the undercoating paint, the undercoating film is preferably cured by heating after applying the undercoating paint so as to prevent the formation of a mixed layer between the undercoating film and a coating film sequentially formed on the undercoating film, and to form a multilayer coating film of excellent appearance.

Color Paint (W)

The color paint (W) comprises a hydroxy-containing resin (w1) and a color pigment (w2).

The form of the color paint (W) is not particularly limited, and can be an aqueous paint, organic solvent-based paint, or solventless paint.

In the present specification, the aqueous paint is a term contrasted with an organic solvent-based paint, and generally means a paint in which coating film-forming resins, pigments, are dispersed and/or dissolved in water or a medium (aqueous medium) containing water as a main component. When the color paint (W) is an aqueous paint, the color paint (W) preferably has a water content within a range of 10 to 90 mass%, more preferably 20 to 80 mass%, and even more preferably 30 to 70 mass%. The organic solvent-based paint is a paint that does not substantially contain water as a solvent, or a paint in which all or most of the solvents are organic solvents.

In the present invention, the color paint (W) is preferably an aqueous paint from the standpoint of reducing environmental load.

Hydroxy-containing Resin (w1)

The hydroxy-containing resin (w1) is a resin with at least one hydroxy group per molecule. Examples of the hydroxy-containing resin (w1) include hydroxy-containing acrylic resins, hydroxy-containing polyester resins, hydroxy-containing polyurethane resins, hydroxy-containing polyolefin resins, hydroxy-containing polyether resins, hydroxy-containing polycarbonate resins, hydroxy-containing epoxy resins, and hydroxy-containing alkyd resins. The resins can be used alone or in a combination of two or more.

As the hydroxy-containing resin (w1), a hydroxy-containing acrylic resin (w11), hydroxy-containing polyester resin (w12), and hydroxy-containing polyurethane resin (w13) can be preferably used from the standpoint of water resistance, chipping resistance, and finished appearance of the formed multilayer coating film. When the substrate is a plastic material, a hydroxy-containing polyolefin resin (w14) can be preferably used as the hydroxy-containing resin (w1) from the standpoint of water resistance, chipping resistance, and finished appearance of the formed multilayer coating film.

The content of the hydroxy-containing resin (w1) in the color paint (W) is preferably within a range of 1 to 100 mass%, more preferably 10 to 90 mass%, and even more preferably 20 to 80 mass%, based on the total resin solids content in the color paint (W).

The color paint (W) preferably contains a crosslinking agent that is reactive with the hydroxy groups of the hydroxy-containing resin (w1) from the standpoint of water resistance, chipping resistance, and finished appearance of the formed multilayer coating film.

As the crosslinking agent, an amino resin, polyisocyanate compound, blocked polyisocyanate compound, can be preferably used from the standpoint of water resistance and adhesion of the obtained multilayer coating film. Of these, from the standpoint of storage stability of the obtained color paint (W), and the water resistance and adhesion of the obtained multilayer coating film, the crosslinking agent preferably contains an amino resin and/or a blocked polyisocyanate compound, more preferably an amino resin, and particularly preferably a melamine resin described below.

Examples of the amino resin that can be used include partially methylolated amino resins or completely methylolated amino resins obtained by reacting an amino component and an aldehyde component. Examples of the amino component include melamine, urea, benzoguanamine, acetoguanamine, steroguanamine, spiroguanamine, dicyandiamide. Examples of the aldehyde component include formaldehyde, paraformaldehyde, acetaldehyde, benzaldehyde.

Other examples of usable amino resins are compounds obtained by partially or completely etherifying a methylol group of the methylolated amino resin with an appropriate alcohol. Examples of the alcohol used for the etherification include methyl alcohol, ethyl alcohol, n-propyl alcohol, isopropyl alcohol, n-butyl alcohol, isobutyl alcohol, 2-ethyl-1-butanol, 2-ethyl-1-hexanol.

The amino resin is preferably a melamine resin. In particular, a methyl-etherified melamine resin obtained by etherifying some or all of the methylol groups of a partially or fully methylolated melamine resin with methyl alcohol; a butyl-etherified melamine resin obtained by etherifying some or all of the methylol groups of a partially or fully methylolated melamine resin with butyl alcohol; and a methyl-butyl mixed etherified melamine resin obtained by etherifying some or all of the methylol groups of a partially or fully methylolated melamine resin with methyl alcohol and butyl alcohol are preferable. A methyl-butyl mixed etherified melamine resin is more preferable.

Of these, from the standpoint of obtaining a coating film with excellent water resistance etc., it is particularly preferable to use a paint composition in which a hydroxy-containing polyester resin, which is produced by using acid components in which the total content of the aliphatic polybasic acid and the alicyclic polybasic acid in the acid components as a raw material is within a range of 30 to 97 mol% and the aromatic polybasic acid content is within a range of 3 to 70 mol%, based on the total amount of the acid components, is used as the hydroxy-containing resin (w1), and at least one alkyl etherified melamine resin selected from the group consisting of the above methyl etherified melamine resin, butyl etherified melamine resin, and methyl-butyl mixed etherified melamine resin, is used as a crosslinking agent.

The melamine resin preferably has a weight average molecular weight within a range of 400 to 6,000, more preferably 700 to 4,000, and particularly preferably 1,000 to 3,000.

The melamine resin can be a commercially available product. Examples include Cymel 202, Cymel 203, Cymel 204, Cymel 211, Cymel 238, Cymel 250, Cymel 251, Cymel 303, Cymel 323, Cymel 324, Cymel 325, Cymel 327, Cymel 350, Cymel 385, Cymel 1156, Cymel 1158, Cymel 1116, Cymel 1130 (trade names; all produced by Allnex Japan Inc.), Urban 120, Urban 20HS, Urban 20SE60, Urban 2021, Urban 2028, Urban 28-60 (trade names; all produced by Mitsui Chemicals, Inc.).

When the melamine resin is used as a crosslinking agent, the following compounds can be used as catalysts: sulfonic acids, such as paratoluenesulfonic acid, dodecylbenzene sulfonic acid, and dinonylnaphthalenesulfonic acid; alkyl phosphate, such as monobutyl phosphoric acid, dibutyl phosphoric acid, mono-2-ethylhexyl phosphoric acid, and di-2-ethylhexyl phosphoric acid; and salts of these acids and amines.

The polyisocyanate compound is a compound having at least two isocyanate groups per molecule. Examples include aliphatic polyisocyanates, alicyclic polyisocyanates, araliphatic polyisocyanates, aromatic polyisocyanates, derivatives of these polyisocyanates.

Examples of the aliphatic polyisocyanates include aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate); aliphatic triisocyanates, such as 2-isocyanatoethyl 2,6-diisocyanatohexanoate, 1,6-diisocyanato-3-isocyanatomethylhexane, 1,4,8-triisocyanatooctane, 1,6,11-triisocyanatoundecane, 1,8-diisocyanato-4-isocyanatomethyloctane, 1,3,6-triisocyanatohexane, and 2,5,7-trimethyl-1,8-diisocyanato-5-isocyanatomethyloctane.

Examples of the alicyclic polyisocyanates include alicyclic diisocyanates, such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), methyl-2,4-cyclohexane diisocyanate, methyl-2,6-cyclohexane diisocyanate, 1,3- or 1,4-bis(isocyanatomethyl)cyclohexane (common name: hydrogenated xylylene diisocyanate) or a mixture thereof, and norbornane diisocyanate; alicyclic triisocyanates, such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)-heptane, and 6-(2-isocyanatoethyl)-2-isocyanatomethyl-2-(3-isocyanatopropyl)-bicyclo(2.2.1)heptane.

Examples of the araliphatic polyisocyanates include araliphatic diisocyanates, such as 1,3- or 1,4-xylylene diisocyanate or a mixture thereof, ω,ω'-diisocyanato-1,4-diethylbenzene, and 1,3- or 1,4-bis(1-isocyanato-1-methylethyl) benzene (common name: tetramethylxylylene diisocyanate) or a mixture thereof; araliphatic triisocyanates, such as 1,3,5-triisocyanatomethylbenzene.

Examples of the aromatic polyisocyanates include aromatic diisocyanates, such as m-phenylene diisocyanate, p-phenylene diisocyanate, 4,4'-diphenyl diisocyanate, 1,5-naphthalene diisocyanate, 2,4'- or 4,4'-diphenylmethane diisocyanate or a mixture thereof, 2,4- or 2,6-tolylene diisocyanate or a mixture thereof, 4,4'-toluidine diisocyanate, and 4,4'-diphenyl ether diisocyanate; aromatic triisocyanates, such as triphenylmethane-4,4',4"-triisocyanate, 1,3,5-triisocyanatobenzene, and 2,4,6-triisocyanatotoluene; aromatic tetraisocyanates, such as 4,4'-diphenylmethane-2,2',5,5'-tetraisocyanate.

Examples of the derivatives of polyisocyanates include a dimer, trimer, biuret, allophanate, uretdione, urethoimine, isocyanurate, oxadiazinetrione, polymethylene polyphenyl polyisocyanate (crude MDI; polymeric MDI), and crude TDI, of the polyisocyanate compounds.

The polyisocyanates and derivatives thereof can be used singly or in a combination of two or more. Of these polyisocyanates, aliphatic diisocyanates, alicyclic diisocyanates, and derivatives thereof are preferably used singly or in a combination of two or more.

As the polyisocyanate compound, prepolymers, which are obtained by subjecting polyisocyanates and derivatives thereof, such as those mentioned above, and a polyhydric alcohol, a low molecular weight polyester resin or water to a urethane reaction under the conditions in which isocyanate groups are in excess, can also be used.

From the standpoint of water resistance of the obtained coating film, it is usually preferable that the polyisocyanate compound is used at a ratio in which the equivalent ratio (NCO/OH) of the isocyanate groups in the polyisocyanate compound to the hydroxy groups in the hydroxy-containing resin (w1) is within a range of 0.5 to 2.0, and particularly preferably within a range of 0.8 to 1.5.

The blocked polyisocyanate compound is a compound in which the isocyanate groups of the polyisocyanate compound are blocked with a blocking agent.

Examples of the blocking agent include phenol-based blocking agents, such as phenol, cresol, xylenol, nitrophenol, ethyl phenol, hydroxydiphenyl, butylphenol, isopropyl phenol, nonylphenol, octylphenol, and methyl hydroxybenzoate; lactam-based blocking agents, such as ε-caprolactam, δ-valerolactam, γ-butyrolactam, and β-propiolactam; ether-based blocking agents, such as ethylene glycol monomethyl ether, ethylene glycol monoethyl ether, ethylene glycol monobutyl ether, diethylene glycol monomethyl ether, diethylene glycol monoethyl ether, propylene glycol monomethyl ether, and methoxymethanol; alcohol-based blocking agents, such as methanol, ethanol, propyl alcohol, butyl alcohol, amyl alcohol, lauryl alcohol, benzyl alcohol, glycolic acid, methyl glycolate, ethyl glycolate, butyl glycolate, lactic acid, methyl lactate, ethyl lactate, butyl lactate, methylol urea, methylol melamine, diacetone alcohol, 2-hydroxyethyl acrylate, and 2-hydroxyethyl methacrylate; oxime-based blocking agents, such as formamide oxime, acetamide oxime, acetoxime, methyl ethyl ketoxime, diacetyl monoxime, benzophenone oxime, and cyclohexane oxime; active methylene-based blocking agents, such as dimethyl malonate, diethyl malonate, ethyl acetoacetate, methyl acetoacetate, and acetylacetone; mercaptan-based blocking agents, such as butyl mercaptan, tert-butyl mercaptan, hexyl mercaptan, tert-dodecyl mercaptan, 2-mercaptobenzothiazole, thiophenol, methylthiophenol, and ethyl thiophenol; acid amide-based blocking agents, such as acetanilide, acetanisidide, acetotoluide, acrylamide, methacrylamide, acetamide, stearic acid amide, and benzamide; imide-based blocking agents, such as succinimide, phthalic imide, and maleic imide; amine-based blocking agents, such as diphenylamine, phenylnaphthylamine, xylidine, N-phenylxylidine, carbazole, aniline, naphthylamine, butylamine, dibutylamine, and butylphenylamine; urea-based blocking agents, such as urea, thiourea, ethylene urea, ethylene thiourea, and diphenyl urea; carbamate-based blocking agents, such as phenyl N-phenylcarbamate; imine-based blocking agents, such as ethyleneimine and propylene imine; sulfite-based blocking agents, such as sodium bisulfite and potassium bisulfite; azole compounds.

Examples of the azole compounds include pyrazoles or pyrazole derivatives, such as pyrazole, 3,5-dimethylpyrazole, 3-methylpyrazole, 4-benzyl-3,5-dimethylpyrazole, 4-nitro-3,5-dimethylpyrazole, 4-bromo-3,5-dimethylpyrazole, and 3-methyl-5-phenylpyrazole; imidazoles or imidazole derivatives, such as imidazole, benzimidazole, 2-methylimidazole, 2-ethylimidazole, and 2-phenylimidazole; imidazoline derivatives, such as 2-methylimidazoline anc 2-phenylimidazoline.

Of these, oxime-based blocking agents, active methylene-based blocking agents, and pyrazoles or pyrazole derivatives are preferred as the blocking agent.

As the blocking agent, hydroxycarboxylic acids having one or more hydroxy groups and one or more carboxyl groups, such as hydroxypivalic acid and dimethylolpropionic acid, can also be used.

When the color paint (W) is an aqueous paint, a blocked polyisocyanate compound having water dispersibility imparted by blocking the isocyanate groups using the hydroxycarboxylic acid and then neutralizing the carboxyl group of the hydroxycarboxylic acid can be preferably used.

When the color paint (W) contains the crosslinking agent, the content of the crosslinking agent is preferably within a range of 1 to 50 mass%, more preferably 5 to 45 mass%, and even more preferably 10 to 40 mass%, based on the total resin solids content in the color paint (W).

When the color paint (W) contains the hydroxy-containing resin (w1) and a crosslinking agent, the content ratio of the hydroxy-containing resin (w1) and the crosslinking agent is preferably such that the hydroxy-containing resin (w1) is within a range of 30 to 99 mass%, more preferably 50 to 95 mass%, and even more preferably 55 to 90 mass%; and the crosslinking agent is within a range of 1 to 70 mass%, more preferably 5 to 50 mass%, and even more preferably 10 to 45 mass%, based on the total solids content of the hydroxy-containing resin (w1) and the crosslinking agent, from the standpoint of water resistance, chipping resistance, and finished appearance of the formed multilayer coating film.

Color Pigment (w2)

The color paint (W) contains a color pigment (w2).

Examples of the color pigment (w2) include titanium oxide, zinc oxide, carbon black, molybdenum red, Prussian blue, cobalt blue, azo-based pigments, phthalocyanine-based pigments, quinacridone-based pigments, isoindoline-based pigments, threne-based pigments, perylene-based pigments, dioxazine-based pigments, diketopyrrolopyrrole-based pigments.

Of these, titanium oxide and carbon black are preferably used from the standpoint of masking properties of the undercoating of the formed multilayer coating film.

The amount of the color pigment (w2) is preferably 1 to 180 parts by mass, more preferably 5 to 160 parts by mass, and even more preferably 15 to 150 parts by mass, based on 100 parts by mass of the resin solids content in the color paint (W), from the standpoint of masking properties etc., of the undercoating of the formed multilayer coating film.

It is preferred that the color paint (W) further contains an extender pigment from the standpoint of chipping resistance of the formed multilayer coating film.

Examples of the extender pigment include barium sulfate, talc, clay, kaolin, barium carbonate, calcium carbonate, silica, alumina white.

Of these, barium sulfate and/or talc are preferably used.

When the color paint (W) contains the extender pigment, the amount of the extender pigment is preferably within a range of 1 to 180 parts by mass, more preferably 5 to 140 parts by mass, and even more preferably 10 to 120 parts by mass, based on 100 parts by mass of the resin solids content in the color paint (W) from the standpoint of chipping resistance etc., of the formed multilayer coating film.

The color paint (W) further contains, if necessary, a resin free of a hydroxy group, an effect pigment, an ultraviolet absorber, a light stabilizer, an antifoaming agent, a thickening agent, a surface adjusting agent.

The color paint (W) can be applied by a usual method. Examples include air-spray coating, airless spray coating, rotary-atomization coating, and like methods. When the color paint (W) is applied, electrostatic charge may be applied, if necessary. In particular, rotary-atomization electrostatic coating and air-spray electrostatic coating are preferable, with rotary-atomization electrostatic coating being particularly preferable.

When air-spray coating, airless spray coating, or rotary-atomization coating is performed, the color paint (W) is preferably adjusted to have a solids content and a viscosity suitable for coating by adding water and/or an organic solvent, and optional additives such as a rheology control agent and an antifoaming agent.

The color paint (W) has a solids content within a range of 10 to 60 mass%, preferably 15 to 55 mass%, and more preferably 20 to 50 mass%. It is also preferred that the viscosity of the color paint (W) be suitably adjusted with water and/or an organic solvent to a range suitable for coating, which is typically 500 to 5000 mPa·s as measured with a Brookfield viscometer at a rotational speed of 6 rpm at 20°C.

From the standpoint of, for example, undercoating masking properties of the formed multilayer coating film, the colored coating film has a thickness of preferably about 5.0 to 40 $\mu$m, more preferably 8.0 to 35 $\mu$m, and even more preferably about 10 to 30 $\mu$m, on a cured film basis.

The colored coating film may be subjected, before curing, to the formation of the effect first base coating film, which is the subsequent step (2), or may be cured by heating before the effect pigment dispersion (X) is applied. When the colored coating film is subjected to step (2) before curing, it can be heat-cured in step (5) described below together with the effect first base coating film, transparent colored second base coating film, and clear coating film formed in steps (2) to (4), which is advantageous in terms of energy saving. When the colored coating film is heat-cured before the effect pigment dispersion (X) is applied, the surface of the cured colored coating film can be polished with water to further improve the smoothness of the coating film. Examples of the heating means for heat-curing the colored coating film include hot air heating, infrared heating, high-frequency heating.

The heating temperature is preferably 80 to 180°C, and more preferably 100 to 160°C. The heating time is preferably 10 to 60 minutes, and more preferably 15 to 40 minutes. If necessary, heating may be performed directly or indirectly at a temperature of about 50 to 110°C, preferably about 60 to 90°C, for about 1 to 60 minutes, by preheating, air blowing, or other means, before carrying out the heat-curing.

Step (2)

According to the method for forming a multilayer coating film of the present invention, the effect pigment dispersion (X) wherein the effect pigment dispersion (X) contains a hydroxy-containing resin (x1) and an effect pigment (x2), and the content of the effect pigment (x2) in the effect pigment dispersion (X) is within a range of 15 to 80 parts by mass, based on 100 parts by mass of the total solids content in the effect pigment dispersion (X) is subsequently applied to the colored coating film obtained in step (1) to form an effect first base coating film.

The effect pigment dispersion (X) is preferably in the form of an aqueous paint from the standpoint of obtaining a multilayer coating film with excellent metallic luster.

Hydroxy-containing Resin (x1)

The hydroxy-containing resin (x1) is a resin having at least one hydroxy group per molecule. Examples of the hydroxy-containing resin (x1) include hydroxy-containing acrylic resins, hydroxy-containing polyester resins, hydroxy-containing polyurethane resins, hydroxy-containing polyolefin resins, hydroxy-containing polyether resins, hydroxy-containing polycarbonate resins, hydroxy-containing epoxy resins, hydroxy-containing alkyd resins.

These resins can be used alone or in a combination of two or more.

As the hydroxy-containing resin (x1), a hydroxy-containing acrylic resin (x11) is preferably used from the standpoint of water resistance of the formed multilayer coating film.

Hydroxy-containing Acrylic Resin (x11)

The hydroxy-containing acrylic resin (x11) can be, for example, produced by copolymerizing a hydroxy-containing polymerizable unsaturated monomer (a) and another polymerizable unsaturated monomer (b) that is copolymerizable with the hydroxy-containing polymerizable unsaturated monomer, by a known method, such as solution polymerization in an organic solvent, emulsion polymerization ir water.

The hydroxy-containing polymerizable unsaturated monomer (a) is a compound having at least one hydroxy group and at least one polymerizable unsaturated bond per molecule. Specific examples of the hydroxy-containing polymerizable unsaturated monomer include monoesters of (meth)acrylic acid with a dihydric alcohol having 2 to 8 carbon atoms (e.g., 2-hydroxyethyl (meth)acrylate, 2-hydroxypropyl (meth)acrylate, 3-hydroxypropyl (meth)acrylate, and 4-hydroxybutyl (meth)acrylate); $\varepsilon$-caprolactone-modified products of the monoesters of the (meth)acrylic acid with a dihydric alcohol having 2 to 8 carbon atoms; N-hydroxymethyl (meth)acrylamide; allyl alcohol; (meth)acrylates having hydroxy-terminated polyoxyethylene chains; etc. However, in the present invention, a monomer corresponding to (xvii) the polymerizable unsaturated monomer having an ultraviolet absorbing functional group described below should be defined as another polymerizable unsaturated monomer (b), which can be copolymerized with the hydroxy-containing polymerizable unsaturated monomer (a) as described above, and a monomer is excluded from the scope of the hydroxy-containing polymerizable unsaturated monomer (a). Such hydroxy-containing polymerizable unsaturated monomers (a) can be used singly or in a combination of two or more.

Examples of the polymerizable unsaturated monomer (b) that is copolymerizable with the hydroxy-containing polymerizable unsaturated monomer include the following monomers (i) to (xx). These polymerizable unsaturated monomers may be used singly or in a combination of two or more.

(i) Alkyl or cycloalkyl (meth)acrylates: examples include methyl (meth)acrylate, ethyl (meth)acrylate, n-propyl (meth) acrylate, isopropyl (meth)acrylate, n-butyl (meth)acrylate, isobutyl (meth)acrylate, tert-butyl (meth)acrylate, n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, *t*-butyl cyclohexyl (meth)acrylate, cyclododecyl (meth)acrylate, tricyclodecanyl (meth)acrylate.

(ii) Polymerizable unsaturated monomers having an isobornyl group: examples include isobornyl (meth)acrylate.

(iii) Polymerizable unsaturated monomers having an adamantyl group: examples include adamantyl (meth)acrylate.

(iv) Polymerizable unsaturated monomers having a tricyclodecenyl group: examples include tricyclodecenyl (meth) acrylate.

(v) Aromatic ring-containing polymerizable unsaturated monomers: examples include benzyl (meth)acrylate, styrene, $\alpha$-methylstyrene, viny toluene.

(vi) Polymerizable unsaturated monomers having an alkoxysilyl group: examples include vinyltrimethoxysilane, vinyltriethoxysilane, vinyl tris(2-methoxyethoxy)silane, $\gamma$-(meth)acryloyloxypropyltrimethoxysilane, $\gamma$-(meth)acryloyloxypropyltriethoxysilane.

(vii) Polymerizable unsaturated monomers having a fluorinated alkyl group: examples include perfluoroalkyl (meth) acrylates, such as perfluorobutylethyl (meth)acrylate and perfluorooctylethyl (meth)acrylate, fluoroolefin.

(viii) Polymerizable unsaturated monomers having a photopolymerizable functional group, such as a maleimide group.

(ix) Vinyl compounds: examples include N-vinylpyrrolidone, ethylene, butadiene, chloroprene, vinyl propionate, vinyl acetate.

(x) Carboxy-containing polymerizable unsaturated monomers: examples include (meth)acrylic acid, maleic acid, crotonic acid, $\beta$-carboxyethyl (meth)acrylate.

(xi) Nitrogen-containing polymerizable unsaturated monomers: examples include (meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, methylene bis(meth)acrylamide, ethylene bis(meth)acrylamide, adducts of glycidyl (meth)acrylate with amine compounds.

(xii) Polymerizable unsaturated monomers having two or more polymerizable unsaturated groups per molecule: examples include allyl (meth)acrylate, ethylene glycol di(meth)acrylate, 1,4-butanediol di(meth)acrylate, neopentyl glycol di(meth)acrylate, 1,6-hexanediol di(meth)acrylate.

(xiii) Epoxy group-containing polymerizable unsaturated monomers: examples include glycidyl (meth)acrylate, $\beta$-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, allyl glycidy ether.

(xiv) (Meth)acrylates having a polyoxyethylene chain having an alkoxy group at a molecular terminal.

(xv) Polymerizable unsaturated monomers having a sulfonic acid group: examples include 2-acrylamide-2-methylpropanesulfonic acid, 2-sulfoethyl (meth)acrylate, allylsulfonic acid, and 4-styrenesulfonic acid; sodium salts and ammonium salts of these sulfonic acids.

(xvi) Polymerizable unsaturated monomers having a phosphoric acid group: examples include acid phosphooxyethyl (meth)acrylate, acid phosphooxypropyl (meth)acrylate, acid phosphooxy poly(oxyethylene)glycol (meth)acrylate, acid phosphooxy poly(oxypropylene)glycol (meth)acrylate.

(xvii) Polymerizable unsaturated monomers having an ultraviolet absorbing functional group: examples include 2-hydroxy-4-(3-methacryloyloxy-2-hydroxypropoxy)benzophenone, 2-hydroxy-4-(3-acryloyloxy-2-hydroxypropoxy) benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone, 2-[2-hydroxy-5-[2-(methacryloyloxy)ethyl]phenyl]-2H-benzotriazole.

(xviii) Light stable polymerizable unsaturated monomers: examples include 4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, 1-crotonoyl-4-crotonoyloxy-2,2,6,6-tetramethylpiperidine.

(xix) Polymerizable unsaturated monomers having a carbonyl group: examples include acrolein, diacetone acrylamide, diacetone methacrylamide, acetoacetoxyethyl methacrylate, formylstyrene, vinyl alkyl ketones having 4 to 7 carbon atoms (e.g., vinyl methyl ketone, vinyl ethyl ketone, and vinyl butyl ketone).

(xx) Acid anhydride group-containing polymerizable unsaturated monomers: examples include maleic anhydride, itaconic anhydride, citraconic anhydride.

In the present specification, the polymerizable unsaturated group means an unsaturated group that can be radically polymerized. Examples of polymerizable unsaturated groups include a vinyl group, (meth)acryloy group.

In the present specification, the term "(meth)acrylate" means acrylate or methacrylate. The term "(meth)acrylic acid" means acrylic acid or methacrylic acid. The term "(meth)acryloyl" means acryloyl or methacryloyl. The term "(meth)acrylamide" means acrylamide or methacrylamide.

The hydroxy-containing polymerizable unsaturated monomer (a) for producing the hydroxy-containing acrylic resin (x11) can be preferably used in an amount within a range of 1 to 45 mass%, more preferably 2 to 35 mass%, and even more preferably 3 to 25 mass%, based on the total amount of monomer components.

When the effect pigment dispersion (X) is an aqueous paint, the hydroxy-containing acrylic resin (x11) preferably contains a water-dispersible hydroxy-containing acrylic resin (x111) from the standpoint of water-resistance and adhesion of the formed multilayer coating film.

Of these, from the standpoint of water resistance and adhesion of the formed multilayer coating film, the water-dispersible hydroxy-containing acrylic resin (x11) preferably comprises a water-dispersible hydroxy-containing acrylic resin (x111') having a core-shell multilayer structure that contains as constituents:

a core of a copolymer (I-1) obtained by copolymerizing 0.1 to 30 mass% of (c) a polymerizable unsaturated monomer having at least two polymerizable unsaturated groups per molecule and 70 to 99.9 mass% of (d) a polymerizable unsaturated monomer having one polymerizable unsaturated group per molecule based on the total mass of (c) the polymerizable unsaturated monomer having at least two polymerizable unsaturated groups per molecule and (d) the polymerizable unsaturated monomer having one polymerizable unsaturated group per molecule, and

a shell of a copolymer (II-1) obtained by copolymerizing 1 to 35 mass% of (a) a hydroxy-containing polymerizable unsaturated monomer, 5 to 60 mass% of (e) a hydrophobic polymerizable unsaturated monomer, and 5 to 94 mass% of (f) a polymerizable unsaturated monomer other than the hydroxy-containing polymerizable unsaturated monomer (a) and the hydrophobic polymerizable unsaturated monomer (e) based on the total mass of the (a) hydroxy-containing polymerizable unsaturated monomer, the (e) hydrophobic polymerizable unsaturated monomer, and the (f) polymerizable unsaturated monomer other than the hydroxy-containing polymerizable unsaturated monomer (a) and the hydrophobic polymerizable unsaturated monomer (e).

Examples of the polymerizable unsaturated monomer having at least two polymerizable unsaturated groups per molecule (c), which is a component of the core, include allyl(meth)acrylate, ethylene glycol di(meth)acrylate, triethylene glycol di(meth)acrylate, tetraethylene glycol di(meth)acrylate, 1,3-butylene glycol di(meth)acrylate, trimethylolpropane tri(meth)acrylate, 1,4-butanediol di(meth)acrylate, neopentyl glycol di(meth)acrylate, 1,6-hexanediol di(meth)acrylate, pentaerythritol di(meth)acrylate, pentaerythritol tetra(meth)acrylate, glycerol di(meth)acrylate, 1,1,1-trishydroxymethyl ethane di(meth)acrylate, 1,1,1-trishydroxymethylene tri(meth)acrylate, 1,1,1-trishydroxymethylpropane tri(meth)acrylate, triallyl isocyanurate, diallyl terephthalate, divinylbenzene.

These can be used singly or in a combination of two or more.

The polymerizable unsaturated monomer having at least two polymerizable unsaturated groups per molecule (c) can be preferably used in an amount within a range of 0.1 to 30 mass%, more preferably 0.5 to 10 mass%, and even more preferably 1 to 5 mass%, based on the total mass of the monomer (c) and the monomer (d).

The polymerizable unsaturated monomer having one polymerizable unsaturated group per molecule (d), which is a component of the core, is a polymerizable unsaturated monomer that can be copolymerized with the polymerizable unsaturated monomer having at least two polymerizable unsaturated groups per molecule (c). Examples include compounds containing one polymerizable unsaturated group, such as a vinyl group, a (meth)acryloyl group, or an allyl group, per molecule.

Specific examples of the polymerizable unsaturated monomer having one polymerizable unsaturated group per molecule (d) include alkyl or cycloalkyl (meth)acrylates, such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, Isostearyl Acrylate (trade name; produced by Osaka Organic Chemical Industry Ltd.), cyclohexyl (meth)acrylate, methylcyclohexyl (meth)acrylate, tert-butylcyclohexyl (meth)acrylate, and cyclododecyl (meth)acrylate; polymerizable unsaturated monomers having an isobornyl group, such as isobornyl (meth)acrylate; polymerizable unsaturated monomers having an adamantly group, such as adamantyl (meth) acrylate; vinyl aromatic compounds, such as styrene, $\alpha$-methylstyrene, and vinyltoluene; monoesters of (meth)acrylic acid with a dihydric alcohol having 2 to 8 carbon atoms, such as 2-hydroxyethyl(meth)acrylate, 2-hydroxypropyl(meth)acrylate, 3-hydroxypropyl(meth)acrylate, and 4-hydroxybutyl(meth)acrylate; $\varepsilon$-caprolactone-modified compounds of monoesters of (meth)acrylic acid with dihydric alcohols having 2 to 8 carbon atoms; allyl alcohol; hydroxy-containing polymerizable unsaturated monomers, such as (meth)acrylates having a polyoxyethylene chain having a hydroxy group at a molecular terminal; carboxy-containing polymerizable unsaturated monomers, such as (meth)acrylic acid, maleic acid, crotonic acid, and $\beta$-carboxyethyl acrylate; nitrogen-containing polymerizable unsaturated monomers, such as (meth)acrylonitrile, (meth)acrylamide, dimethylaminopropyl (meth)acrylamide, dimethylaminoethyl (meth)acrylate, and adducts of glycidyl (meth)acrylate with amines. These can be used singly or in a combination of two or more.

The polymerizable unsaturated monomer having one polymerizable unsaturated group per molecule (d) can be preferably used in an amount within a range of 90 to 99.9 mass%, more preferably 90 to 99.5 mass%, and even more preferably 95 to 99 mass%, based on the total mass of the monomer (c) and monomer (d).

Examples of the hydroxy-containing polymerizable unsaturated monomer (a), which is a component of the shell, include monoesters of (meth)acrylic acid with a dihydric alcohol having 2 to 8 carbon atoms, such as 2-hydroxyethyl(meth) acrylate, 2-hydroxypropyl(meth)acrylate, 3-hydroxypropyl(meth)acrylate, and 4-hydroxybutyl(meth)acrylate; ε-caprolactone-modified compounds of the monoesters of (meth)acrylic acid with dihydric alcohols having 2 to 8 carbon atoms; allyl alcohol; (meth)acrylates having a polyoxyethylene chain having a hydroxy group at a molecular terminal.

These can be used singly or in a combination of two or more.

The hydroxy-containing polymerizable unsaturated monomer (a) can be preferably used in an amount of 1 to 35 mass%, more preferably 5 to 25 mass%, and even more preferably 8 to 20 mass%, based on the total mass of the monomer (a), monomer (e), and monomer (f).

Examples of the hydrophobic polymerizable unsaturated monomer (e), which is a component of the shell, include polymerizable unsaturated monomers containing a linear, branched or cyclic, saturated or unsaturated hydrocarbon group containing 6 or more carbon atoms. Specific examples include alkyl or cycloalkyl (meth)acrylates, such as n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, Isostearyl Acrylate (trade name; produced by Osaka Organic Chemical Industry Ltd.), cyclohexyl (meth)acrylate, methylcyclohexyl (meth)acrylate, tert-butylcyclohexyl (meth)acrylate, and cyclododecyl (meth)acrylate; polymerizable unsaturated monomers having an isobornyl group, such as isobornyl (meth)acrylate; polymerizable unsaturated monomers having an adamantly group, such as adamantyl (meth) acrylate; vinyl aromatic compounds, such as styrene, α-methylstyrene, anc vinyltoluene.

These can be used singly or in a combination of two or more. Of these, the hydrophobic polymerizable unsaturated monomer (e) is preferably a vinyl aromatic compound and particularly preferably styrene from the standpoint of smoothness, distinctness, of the formed coating film.

It is usually preferable that the hydrophobic polymerizable unsaturated monomer (e) is used in an amount within a range of 5 to 60 mass%, more preferably 8 to 40 mass%, and even more preferably 11 to 25 mass%, based on the total amount of the monomer (a), monomer (e), and monomer (f).

Examples of the polymerizable unsaturated monomer (f), i.e., a polymerizable unsaturated monomer other than the hydroxy-containing polymerizable unsaturated monomer (a) and the hydrophobic polymerizable unsaturated monomer (e), which is a component of the shell, include alkyl (meth)acrylates, such as methyl (meth)acrylate, ethyl (meth) acrylate, n-propyl (meth)acrylate, isopropyl (meth)acrylate, n-butyl (meth)acrylate, isobutyl (meth)acrylate, and tert-butyl (meth)acrylate; and carboxy-containing polymerizable unsaturated monomers, such as (meth)acrylic acid, maleic acid, crotonic acid, and β-carboxyethyl acrylate. These can be used singly or in a combination of two or more.

The polymerizable unsaturated monomer (f), which is a monomer other than the hydroxy-containing polymerizable unsaturated monomer (a) and the hydrophobic polymerizable unsaturated monomer (e), preferably contains, as at least a part of the component, a carboxy-containing polymerizable unsaturated monomer (g) from the standpoint of ensuring the smoothness of the formed coating film.

Examples of the carboxy-containing polymerizable unsaturated monomer (g) include (meth)acrylic acid, maleic acid, crotonic acid, β-carboxyethyl acrylate.

Of these, (meth)acrylic acid is preferable.

From the standpoint of stability of the water-dispersible hydroxy-containing acrylic resin (x111') in the aqueous medium and smoothness and water resistance of the formed coating film, it is usually preferable that the carboxy-containing polymerizable unsaturated monomer (g) is used in an amount of 1 to 40 mass%, more preferably 6 to 25 mass%, and even more preferably 11 to 19 mass%, based on the total mass of the monomer (a), monomer (e), and monomer (f).

From the standpoint of, for example, water resistance and adhesion of the formed multilayer coating film, it is usually preferable that the water-dispersible hydroxy-containing acrylic resin (x111') has a hydroxy value of 1 to 200 mg KOH/g, more preferably 5 to 180 mg KOH/g, and even more preferably 7 to 130 mg KOH/g.

From the standpoint of, for example, storage stability, and water resistance and adhesion of the formed coating film, it is usually preferable that the water-dispersible hydroxy-containing acrylic resin (x111') has an acid value of 1 to 130 mg KOH/g, more preferably 5 to 100 mg KOH/g, and even more preferably 7 to 70 mg KOH/g. From the standpoint of water resistance and adhesion of the formed multilayer coating film, polymerizable unsaturated monomers containing only one polymerizable unsaturated group per molecule are preferably used as monomer (a), monomer (e), and monomer (f), and the shell of the water-dispersible hydroxy-containing acrylic resin (x111') is preferably not crosslinked.

The water-dispersible hydroxy-containing acrylic resin (x111') can be obtained, for example, by adding a monomer mixture (II) that contains 1 to 35 mass% of the hydroxy-containing polymerizable unsaturated monomer (a), 5 to 60 mass% of the hydrophobic polymerizable unsaturated monomer (e), and 5 to 94 mass% of the polymerizable unsaturated monomer (f), which is a polymerizable unsaturated monomer other than the monomer (a) and monomer (d), based on the total mass of the hydroxy-containing polymerizable unsaturated monomer (a), hydrophobic polymerizable unsaturated monomer (e), and polymerizable unsaturated monomer (f) other than the hydroxy-containing polymerizable unsaturated monomer (a) and hydrophobic polymerizable unsaturated monomer (e), to an emulsion that is obtained by emulsion polymerization of a monomer mixture (I) that contains 0.1 to 30 mass% of the polymerizable unsaturated monomer (c) having at least two polymerizable unsaturated groups per molecule, and 70 to 99.9 mass% of the polymerizable unsaturated monomer (d) having one polymerizable unsaturated group per molecule, based on the total mass of the polymerizable unsaturated monomer (c) having at least two polymerizable unsaturated groups per molecule and the polymerizable unsaturated monomer (d) having one polymerizable unsaturated group per molecule, and further polymerizing them.

The emulsion polymerization of the monomer mixture can be performed by a known method, such as by using a polymerization initiator in the presence of an emulsifier.

The emulsifier is preferably an anionic emulsifier or a nonionic emulsifier. Examples of the anionic emulsifier include sodium salts or ammonium salts of organic acids, such as alkyl sulfonic acid, alkylbenzene sulfonic acid, and alkyl phosphoric acid. Examples of the nonionic emulsifier include polyoxyethylene oleyl ether, polyoxyethylene stearyl ether, polyoxyethylene lauryl ether, polyoxyethylene tridecyl ether, polyoxyethylene phenyl ether, polyoxyethylene nonylphenyl ether, polyoxyethylene octylphenyl ether, polyoxyethylene monolaurate, polyoxyethylene monostearate, polyoxyethylene monooleate, sorbitan monolaurate, sorbitan monostearate, sorbitan monostearate, sorbitan triolate, polyoxyethylene sorbitar monolaurate.

For example, polyoxyalkylene group-containing anionic emulsifiers having an anionic group and a polyoxyalkylene group, such as a polyoxyethylene group or a polyoxypropylene group, per molecule, or reactive anionic emulsifiers having an anionic group and a radical polymerizable unsaturated group per molecule can be used. Of these, reactive anionic emulsifiers are preferably used.

Examples of the reactive anionic emulsifiers include sodium salts or ammonium salts of sulfonic acid compounds having a radical polymerizable unsaturated group, such as a (meth)allyl group, a (meth)acryloyl group, a propenyl group, or a butenyl group. Of these, ammonium salts of sulfonic acid compounds having a radical polymerizable unsaturated group are preferred because the formed coating film has excellent water resistance. Examples of the ammonium salts of sulfonic acid compounds include commercially available products, such as Latemul S-180A (trade name; produced by Kao Corporation).

Among the ammonium salts of a sulfonic acid compound having a radical polymerizable unsaturated group, ammonium salts of sulfonic acid compounds having a radical polymerizable unsaturated group and a polyoxyalkylene group are more preferred. Examples of the ammonium salts of sulfonic acid compounds having a radical polymerizable unsaturated group and a polyoxyalkylene group include commercially available products, such as Aqualon KH-10 (trade name; produced by DKS Co. Ltd.) and SR-1025A (trade name; produced by Adeka Corporation).

The emulsifier can be preferably used in an amount within a range of 0.1 to 15 mass%, more preferably 0.5 to 10 mass%, and even more preferably 1 to 5 mass%, based on the total amount of the monomers used.

The polymerization initiator can be an oil-soluble polymerization initiator or a water-soluble polymerization initiator. Examples include organic peroxides, such as benzoyl peroxide, octanoyl peroxide, lauroyl peroxide, stearoyl peroxide, cumene hydroperoxide, tert-butyl peroxide, tert-butyl peroxylaurate, tert-butyl peroxyisopropyl carbonate, tert-butyl peroxyacetate, and diisopropylbenzene hydroperoxide; azo compounds, such as azobisisobutyronitrile, azobis(2,4-dimethylvaleronitrile), azobis(2-methylpropionnitrile), azobis(2-methylbutyronitrile), 4,4'-azobis(4-cyanobutanoic acid), dimethylazobis(2-methylpropionate), azobis[2-methyl-N-(2-hydroxyethyl)propionamide], and azobis{2-methyl-N-[2-(1-hydroxybutyl)]propionamide}; persulfates, such as potassium persulfate, ammonium persulfate, and sodium persulfate.

These can be used singly or in a combination of two or more.

If necessary, the polymerization initiator can be combined with a reducing agent, such as sugar, sodium formaldehyde sulfoxylate, or an iron complex, to make a redox polymerization system.

The amount of the polymerization initiator used is preferably 0.1 to 5 mass%, and more preferably 0.2 to 3 mass%, based on the total mass of the monomers used. The method for adding the polymerization initiator is not particularly limited, and can be suitably selected according to the type, amount, of polymerization initiator. For example, the polymerization initiator may be incorporated into a monomer mixture or an aqueous medium beforehand, or may be added all at once or dropwise at the time of the polymerization.

The water-dispersible hydroxy-containing acrylic resin (x111') can be obtained by adding a monomer mixture (II) that contains the hydroxy-containing polymerizable unsaturated monomer (a), the hydrophobic polymerizable unsaturated monomer (e), and the polymerizable unsaturated monomer (f), which is a polymerizable unsaturated monomer other than the monomer (a) and the monomer (e), to the emulsion obtained as described above, and further polymerizing them.

If necessary, the monomer mixture (II) can appropriately contain components such as a polymerization initiator, a chain transfer agent, a reducing agent, and an emulsifier as listed above.

The monomer mixture (II) can be added dropwise as is, but is preferably dispersed in an aqueous medium and then added dropwise as a monomer emulsion. The particle size of the monomer emulsion in this case is not particularly limited.

The polymerization of the monomer mixture (II) can be performed, for example, by adding the monomer mixture (II), which may be emulsified, to the emulsion all at once or dropwise, and heating the mixture to an appropriate temperature while stirring.

The water-dispersible hydroxy-containing acrylic resin (x111') obtained as described above can have a core-shell multilayer structure in which a copolymer (I-1) constitutes the core, and a copolymer (II-1) constitutes the shell. The copolymer (I-1) is formed from the monomer mixture (I) containing the polymerizable unsaturated monomer (c) having at least two polymerizable unsaturated groups per molecule and the polymerizable unsaturated monomer (d) having one polymerizable unsaturated group per molecule. The copolymer (II-1) is formed from the monomer mixture (II) containing the hydroxy-containing polymerizable unsaturated monomer (a), the hydrophobic polymerizable unsaturated monomer (e), and the polymerizable unsaturated monomer (f), which is a monomer other than the monomers (a) and (e).

The water-dispersible hydroxy-containing acrylic resin (x111') can be resin particles formed of three or more layers by adding, between the step of obtaining the copolymer (I-1) and the step of obtaining the copolymer (II-1), the step of performing emulsion polymerization by supplying at least one polymerizable unsaturated monomer (one kind or a mixture of two or more kinds of polymerizable unsaturated monomers) for forming another resin layer.

In the present invention, the "shell" of the water-dispersible hydroxy-containing acrylic resin (x111') means a polymer layer that is present in the outermost layer of resin particles, the "core" means a polymer layer of an inner layer of resin particles, excluding the shell part, and the "core-shell structure" means a structure that has the core and the shell. As the core-shell structure, a layer structure in which the core is completely covered with the shell is common. However, the amount of monomers of the shell may be insufficient to form such a layer structure, depending on the mass ratio of the core and the shell. In such a case, it is not necessary that the core-shell structure be a complete layer structure as described above. The core-shell structure can be a structure in which a part of the core is covered with the shell, or a structure in which a polymerizable unsaturated monomer, which is a component of the shell, is graft-polymerized with a part of the core. The concept of the multilayer structure in the core-shell structure also applies to the case in which a multilayer structure is formed in the core of the water-dispersible hydroxy-containing acrylic resin (x111').

From the standpoint of water resistance and adhesion of the formed multilayer coating film, the solids mass ratio of the copolymer (I-1) to the copolymer (II-1) in the water-dispersible hydroxy-containing acrylic resin (x111') having a core-shell multilayer structure is preferably within a range of 10/90 to 90/10, more preferably 50/50 to 85/15, and even more preferably 65/35 to 80/20.

The water-dispersible hydroxy-containing acrylic resin (x111') obtained as described above can generally have an average particle size of 10 to 1,000 nm, and particularly 20 to 500 nm. The average particle size of the hydroxy-containing acrylic resin is a value measured at a measurement temperature of 20°C by the Coulter counter method. This measurement can be performed, for example, by using a Coulter N4 (trade name; produced by Beckman Coulter Corporation).

In order to improve the mechanical stability of the water dispersion particles of the obtained water-dispersible hydroxy-containing acrylic resin (x111'), it is desirable to neutralize acidic groups, such as carboxyl groups of the water-dispersible hydroxy-containing acrylic resin (x111'), with a neutralizing agent. The neutralizing agent can be used without particular limitation as long as it can neutralize acidic groups. Examples include sodium hydroxide, potassium hydroxide, trimethylamine, 2-(dimethylamino)ethanol, 2-amino-2-methyl-1-propanol, triethylamine, and aqueous ammonia. It is desirable that these neutralizing agents are used in such an amount that the water dispersion of the water-dispersible hydroxy-containing acrylic resin (x111') after neutralization has a pH of about 6.5 to 9.0.

From the standpoint of water resistance of the formed multilayer coating film, the hydroxy-containing acrylic resin (x11) preferably has a hydroxy value of 1 to 200 mg KOH/g, more preferably 5 to 180 mg KOH/g, and even more preferably 7 to 130 mg KOH/g.

From the standpoint of water resistance of the formed multilayer coating film, the hydroxy-containing acrylic resin (x11) preferably has an acid value of 1 to 130 mg KOH/g, more preferably 5 to 100 mg KOH/g, and even more preferably 7 to 70 mg KOH/g.

From the standpoint of obtaining a design exhibiting metallic luster and water resistance of the formed multilayer coating film, the content of the hydroxy-containing acrylic resin (x11) is preferably within a range of 0.5 to 40 parts by mass, more preferably 2.5 to 35 parts by mass, and even more preferably 5 to 30 parts by mass, based on 100 parts by mass of the total solids content of the effect base paint (X).

In the present specification, the solids content refers to a nonvolatile content, and means a residue obtained by removing volatile components such as water and an organic solvent from a sample. The solids content can be calculated by multiplying the mass of a sample by the solids concentration. The solids concentration can be measured by dividing the mass of a residue obtained by drying 3 grams of a sample at 105°C for 3 hours by the mass before drying.

Effect Pigment (x2)

The effect pigment dispersion (X) contains an effect pigment (x2).

Examples of the effect pigment (x2) include vapor-deposition metal flake pigments, aluminum flake pigments, and interference pigments. Of these, from the standpoint of obtaining a multilayer coating film with excellent metallic luster, it is preferable to use a vapor-deposition metal flake pigment or an aluminum flake pigment, or both; it is more preferable to use a vapor-deposition metal flake pigment; and it is furthermore preferable to use the vapor-deposition aluminum flake pigment described later. One or a combination of two or more of these pigments can be suitably selected for use, depending on the texture desired for the formed coating film.

The vapor-deposition metal flake pigment is obtained by vapor-depositing a metal film on a base material, peeling the base material, and then grinding the vapor-deposition metal film. Examples of the base material include films.

The material of the above metal is not particularly limited. Examples include aluminum, gold, silver, copper, brass, titanium, chromium, nickel, nickel chromium, and stainless steel. Of these, aluminum or chromium is particularly preferable, from the standpoint of, for example, availability and convenience in handling. In the present specification, a vapor-deposition metal flake pigment obtained by vapor-depositing aluminum refers to a "vapor-deposition aluminum flake pigment," and a vapor-deposition metal flake pigment obtained by vapor-depositing chromium refers to a "vapor-deposition chromium flake pigment."

The vapor-deposition metal flake pigment for use may be a vapor-deposition metal flake pigment formed from a single layer of a vapor-deposition metal film, or a vapor-deposition metal flake pigment formed from a multilayer composed of a vapor-deposition metal film and additional other metal or metal oxide.

The vapor-deposition aluminum flake pigment is preferably surface-treated with silica, from the standpoint of, for example, obtaining a coating film with excellent storage stability and metallic luster.

Examples of commercially available products that can be used as the vapor-deposition aluminum flake pigment include Metalure series (trade name, produced by Eckart), Hydroshine WS series (trade name, produced by Eckart), Decomet series (trade name, produced by Schlenk), and Metasheen series (trade name, produced by BASF).

Examples of commercially available products that can be used as the vapor-deposition chromium flake pigment include Metalure Liquid Black series (trade name, produced by Eckart).

The average thickness of the vapor-deposition metal flake pigment is preferably 0.01 to 1.0 $\mu$m, and more preferably 0.015 to 0.1 $\mu$m.

The vapor-deposition metal flake pigment has an average particle size of preferably 1 to 50 $\mu$m, and more preferably 5 to 20 $\mu$m.

The aluminum flake pigment is typically produced by crushing and grinding aluminum using a grinding aid in a ball mill or attritor mill, in the presence of a grinding liquid medium. Grinding aids for use in the production step of the aluminum flake pigment include higher fatty acids, such as oleic acid, stearic acid, isostearic acid, lauric acid, palmitic acid, and myristic acid; as well as aliphatic amines, aliphatic amides, and aliphatic alcohols. Grinding liquid media for use include aliphatic hydrocarbons, such as a mineral spirit.

The aluminum flake pigment for use may be a colored aluminum pigment prepared by coating the surface of an aluminum flake pigment with a color pigment, and further coating it with a resin; or a colored aluminum pigment prepared by coating the surface of an aluminum flake pigment with a metal oxide such as iron oxide.

The aluminum flake pigment for use preferably has an average particle size within a range of 1 to 100 $\mu$m, more preferably 5 to 50 $\mu$m, and particularly preferably 7 to 30 $\mu$m. The aluminum flake pigment for use preferably has a thickness within a range of 0.01 to 2.0 $\mu$m, and particularly preferably within a range of 0.02 to 1.0 $\mu$m.

The interference pigments may be, for example, effect pigments obtained by coating the surface of transparent or translucent flaky base materials, such as natural mica, synthetic mica, glass, silica, and various metal oxides (e.g., iron oxide and aluminum oxide) with metal oxides with refractive indices different from those of the base materials. The interference pigments may be used singly or in a combination of two or more.

Natural mica is a flaky base material obtained by pulverizing mica from ore. Synthetic mica is synthesized by heating an industrial material, such as $SiO_2$, MgO, $Al_2O_3$, $K_2SiF_6$, or $Na_2SiF_6$, to melt the material at a high temperature of about 1500°C; and cooling the melt for crystallization. When compared with natural mica, synthetic mica contains a smaller amount of impurities, and has a more uniform size and thickness. Specifically, examples of synthetic mica base materials include fluorophlogopite ($KMg_3AlSi_3O_{10}F_2$), potassium tetrasilicon mica ($KMg_{2.5}AlSi_4O_{10}F_2$), sodium tetrasilicon mica ($NaMg_{2.5}AlSi_4O_{10}F_2$), Na taeniolite ($NaMg_2LiSi_4O_{10}F_2$), and LiNa taeniolite ($LiMg_2LiSi_4O_{10}F_2$).

Examples of metal oxides for coating base materials include titanium oxide and iron oxide. Interference pigments can develop various different interference colors depending on the difference in the thickness of the metal oxide.

Specific examples of the interference pigment include the metal oxide-coated mica pigments, metal oxide-coated alumina flake pigments, metal oxide-coated glass flake pigments, and metal oxide-coated silica flake pigments described below.

Metal oxide-coated mica pigments are pigments obtained by coating the surface of a natural mica- or synthetic mica-base material with a metal oxide.

Metal oxide-coated alumina flake pigments are pigments obtained by coating the surface of an alumina flake base material with a metal oxide. Alumina flakes refer to flaky (thin) aluminum oxides, which are clear and colorless.

Alumina flakes do not necessarily consist of only aluminum oxide, and may contain other metal oxides.

Metal oxide-coated glass flake pigments are pigments obtained by coating the surface of a flaky glass base material with a metal oxide. The metal oxide-coated glass flake pigments have a smooth base material surface, which causes intense light reflection.

Metal oxide-coated silica flake pigments are pigments obtained by coating flaky silica, a base material having a smooth surface and a uniform thickness, with a metal oxide.

The content of the effect pigment (x2) is within a range of 15 to 80 parts by mass based on 100 parts by mass of the total solids content in the effect pigment dispersion (X).

When the content of the effect pigment (x2) is 15 parts by mass or more based on 100 parts by mass of the total solids content in the effect pigment dispersion (X), a multilayer coating film with excellent metallic luster can be obtained. When the content is 80 parts by mass or less, a multilayer coating film with excellent water resistance can be obtained.

In particular, the content of the effect pigment (x2) is preferably within a range of 17 to 75 parts by mass, and more preferably within a range of 20 to 70 parts by mass, based on 100 parts by mass of the total solids content in the effect pigment dispersion (X), from the standpoint of obtaining a multilayer coating film with excellent water resistance and excellent metallic luster.

Further, when a vapor-deposition aluminum flake pigment is used as the effect pigment (x2), the content of the effect pigment (x2) is preferably within a range of 15 to 55 parts by mass, and more preferably within a range of 20 to 45 parts by mass, based on 100 parts by mass of the total solids content in the effect pigment dispersion (X), from the standpoint of obtaining a multilayer coating film with excellent water resistance and excellent metallic luster.

Further, when an aluminum flake pigment is used as the effect pigment (x2), the content of the effect pigment (x2) is preferably within a range of 45 to 80 parts by mass, and more preferably within a range of 55 to 75 parts by mass, based on 100 parts by mass of the total solids content in the effect pigment dispersion (X), from the standpoint of obtaining a multilayer coating film with excellent water resistance and excellent metallic luster.

It is preferable that the effect pigment dispersion (X) further contains water as a main solvent, and contains a surface-adjusting agent and a rheology control agent.

The surface-adjusting agent is for use in facilitating uniform orientation of the interference pigment dispersed in water on an object when the effect pigment dispersion (X) is applied.

The surface-adjusting agent for use may be a known surface-adjusting agent.

Examples of surface-adjusting agents include surface-adjusting agents such as silicone-based surface-adjusting agents, acrylic-based surface-adjusting agents, vinyl-based surface-adjusting agents, fluorine-based surface-adjusting agents, and acetylene-diol-based surface-adjusting agents. In particular, from the standpoint of orientation of the effect pigment (x2), acetylene-diol-based surface-adjusting agents are preferable.

These surface-adjusting agents may be used singly or in a combination of two or more.

Examples of commercially available surface-adjusting agents include the Dynol series, Surfynol series, and Tego series (produced by Evonik Industries AG), BYK series (produced by BYK-Chemie), Glanol series and Polyflow series (produced by Kyoeisha Chemical Co., Ltd.), and Disparlon series (produced by Kusumoto Chemicals, Ltd.).

When the effect pigment dispersion (X) contains a surface-adjusting agent, the content of the surface-adjusting agent is preferably within a range of 2.5 to 35 parts by mass, and more preferably within a range of 5 to 25 parts by mass, based on 100 parts by mass of the total solids content in the effect pigment dispersion (X), from the standpoint of, for example, obtaining a multilayer coating film with excellent metallic luster.

The rheology control agent for use may be a known rheology control agent. Examples include silica-based fine powder, mineral-based rheology control agents, barium sulfate fine powder, polyamide-based rheology control agents, organic resin fine-particle rheology control agents, diurea-based rheology control agents, urethane-associated rheology control agents, polyacrylic-acid-based rheology control agents, which are acrylic swelling agents, and cellulose-based rheology control agents. In particular, from the standpoint of, for example, obtaining a multilayer coating film with excellent metallic luster, it is preferable to use a mineral-based rheology control agent, a polyacrylic acid-based rheology control agent, and a cellulose-based rheology control agent, and it is particularly preferable to use a cellulose-based rheology control agent. These rheology control agents may be used singly or in a combination of two or more.

Examples of mineral-based rheology control agents include swelling laminar silicate that has a 2:1 crystalline structure. Specific examples include smectite clay minerals, such as natural or synthetic montmorillonite, saponite, hectorite, stevensite, beidellite, nontronite, bentonite, and laponite; swelling mica clay minerals, such as Na-type tetrasilicic fluorine mica, Li-type tetrasilicic fluorine mica, Na salt-type fluorine taeniolite, and Li-type fluorine taeniolite; vermiculite; substituted products or derivatives thereof; and mixtures thereof.

Examples of polyacrylic-acid-based rheology control agents include sodium polyacrylate and polyacrylic acid-(meth)acrylic acid ester copolymers.

Examples of commercially available products of polyacrylic-acid-based rheology control agents include Primal ASE-60, Primal TT615, and Primal RM5 (trade names; produced by The Dow Chemical Company); and SN Thickener 613, SN Thickener 618, SN Thickener 630, SN Thickener 634, and SN Thickener 636 (trade names; produced by San Nopco Limited). The acid value of the solids content of the polyacrylic-acid-based rheology control agent for use is preferably within a range of 30 to 300 mg KOH/g, and more preferably 80 to 280 mg KOH/g.

Examples of cellulose-based rheology control agents include carboxymethylcellulose, methylcellulose, hydroxyethylcellulose, hydroxyethylmethylcellulose, hydroxypropylmethylcellulose, nanocellulose crystals, and cellulose nanofibers. Of these, it is preferable to use cellulose nanofibers and/or cellulose nanocrystals, and it is more preferable to use cellulose nanofibers, from the standpoint of, for example, obtaining a multilayer coating film with excellent metallic luster.

The cellulose nanofibers may also be referred to as "cellulose nanofibrils" or "fibrillated cellulose." Further, the cellulose nanocrystals may also be referred to as "nanocellulose crystals."

The cellulose nanofibers have a number average fiber diameter preferably within a range of 2 to 500 nm, more preferably 2 to 250 nm, and still more preferably 2 to 150 nm, and also have a number average fiber length of preferably within a range of 0.1 to 20 μm, more preferably 0.1 to 15 μm, and still more preferably 0.1 to 10 μm, from the standpoint of, for example, obtaining a multilayer coating film with excellent metallic luster.

The number average fiber diameter and number average fiber length are measured and calculated from, for example, an image obtained by subjecting a sample (cellulose nanofibers diluted with water) to a dispersion treatment, casting the sample on a grid coated with a carbon film that has been subjected to hydrophilic treatment, and observing the sample with a transmission electron microscope (TEM).

The cellulose nanofibers for use may be those obtained by defibrating a cellulose material and stabilizing it in water. The cellulose material as used here refers to cellulose-main materials in various forms. Specific examples include pulp (e.g., grass-plant-derived pulp, such as wood pulp, jute, Manila hemp, and kenaf); natural cellulose, such as cellulose produced by microorganisms; regenerated cellulose obtained by dissolving cellulose in a copper ammonia solution or a solvent such as a morpholine derivative, and subjecting the dissolved cellulose to spinning; and fine cellulose obtained by subjecting the cellulose material to mechanical treatment, such as hydrolysis, alkali hydrolysis, enzymatic decomposition, blasting treatment, or vibration ball milling, to depolymerize the cellulose.

Cellulose nanofibers for use may be anionically modified cellulose nanofibers. Examples of anionically modified cellulose nanofibers include carboxylated cellulose nanofibers, carboxymethylated cellulose nanofibers, sulfonic acid group-containing cellulose nanofibers, and phosphate-group-containing cellulose nanofibers. The anionically modified cellulose nanofibers can be obtained, for example, by incorporating functional groups such as carboxyl groups and carboxymethyl groups into a cellulose material by a known method, washing the obtained modified cellulose to prepare a dispersion of the modified cellulose, and defibrating this dispersion. The carboxylated cellulose is also referred to as "oxidized cellulose."

The oxidized cellulose can be obtained, for example, by oxidizing the cellulose material in water by using an oxidizing agent in the presence of a compound selected from the group consisting of an N-oxyl compound, a bromide, an iodide, and a mixture thereof.

Examples of commercially available products of cellulose nanofibers include Rheocrysta (registered trademark) produced by DKS Co., Ltd., and Aurovisc (registered trademark) produced by Oji Holdings Corporation. Examples of commercially available products of cellulose nanocrystals include CelluForce NCC produced by CelluForce, Inc.

When the effect pigment dispersion (X) contains a rheology control agent, the content of the rheology control agent is preferably within a range of 5 to 40 parts by mass, and more preferably within a range of 10 to 25 parts by mass, based on 100 parts by mass of the total solids content in the effect pigment dispersion (X), from the standpoint of, for example, obtaining a multilayer coating film with excellent metallic luster.

The effect pigment dispersion (X) may further appropriately contain, if necessary, a resin that does not contain a hydroxy group, a color pigment, an extender pigment, an organic solvent, a pigment dispersant, a pigment derivative, an anti-settling agent, an antifoaming agent, an ultraviolet absorber, a light stabilizer.

Specific examples of color pigments include, but are not particularly limited to, organic pigments, such as benzimidazolone pigments, pyrazolone pigments, azo pigments, quinacridone pigments, diketopyrrolopyrrole pigments, perylene pigments, perinone pigments, isoindoline pigments, isoindolinone pigments, metal chelate azo pigments, phthalocyanine pigments, indanthrone pigments, dioxazine pigments, threne pigments, and indigo pigments; composite-oxide inorganic pigments; and carbon black pigments. These pigments may be used singly or in a combination of two or more.

When the effect pigment dispersion (X) contains the color pigment, the content is preferably 30 parts by mass or less, and more preferably within a range of 0.1 to 20 parts by mass, based on 100 parts by mass of the total solids content in the effect pigment dispersion (X).

Examples of extender pigments include talc, silica, calcium carbonate, barium sulfate, and zinc oxide.

When the effect pigment dispersion (X) contains the extender pigment, the content is preferably 30 parts by mass or less, and more preferably within a range of 0.1 to 20 parts by mass, based on 100 parts by mass of the total solids content in the effect pigment dispersion (X).

The effect pigment dispersion (X) can be applied by a usual method. Examples include air-spray coating, airless spray coating, rotary-atomization coating, and like methods. When the effect pigment dispersion (X) is applied, electrostatic charge may be applied, if necessary. In particular, rotary-atomization electrostatic coating and air-spray electrostatic coating are preferable, with rotary-atomization electrostatic coating being particularly preferable.

When air-spray coating, airless spray coating, or rotary-atomization coating is performed, the effect pigment dispersion (X) is preferably adjusted to have a solids content and a viscosity suitable for coating by appropriately adding water and/or an organic solvent, and optional additives such as an antifoaming agent.

The solids content of the effect pigment dispersion (X) during coating is preferably within a range of 0.1 to 10 mass%, more preferably 0.5 to 9 mass%, and still more preferably 1 to 8 mass%, from the standpoint of, for example, obtaining a multilayer coating film with excellent metallic luster.

From the standpoint of, for example, obtaining a multilayer coating film with excellent metallic luster, the viscosity of the effect pigment dispersion (X) at a temperature of 20°C as measured with a Brookfield viscometer at 60 rpm after 1 minute (also referred to as "the B60 value" in the present specification) is preferably 50 to 900 mPa·s, and more preferably 100 to 800 mPa·s. The viscometer used for this measurement is a VDA digital Vismetron viscometer (a Brookfield viscometer, produced by Shibaura System Co., Ltd.).

The effect first base coating film has a thickness of preferably about 0.02 to 7 $\mu$m, more preferably 0.1 to 4 $\mu$m, and still more preferably about 0.15 to 3 $\mu$m, on a cured film basis, from the standpoint of, for example, obtaining a multilayer coating film with excellent metallic luster.

Step (3)

According to the method for forming a multilayer coating film of the present invention, a transparent colored second base paint (Y) containing a hydroxy-containing resin (y1) and a color pigment (y2) is subsequently applied to the effect first base coating film formed in step (2) to form a transparent colored second base coating film.

The form of the transparent colored second base paint (Y) is not particularly limited and can be an aqueous paint, an organic-solvent-based paint, or a solventless paint.

In the present invention, the transparent colored second base paint (Y) is preferably an aqueous paint from the standpoint of reducing environmental load.

In the present invention, the transparent colored second base paint (Y) is a colored, transparent paint. The transparent colored second base coating film obtained by applying the transparent colored second base paint (Y) is colored and does not hide the undercoat layer.

In the present specification, transparent coloring is defined by the haze value of a coating film. The transparent colored second base paint (Y) for use in the present invention is such that a dry film with a film thickness of 10 $\mu$m obtained by applying the transparent colored second base paint (Y) has a haze value of 30% or less. In the present invention, the haze value is defined as a value calculated according to the following formula based on the diffuse light transmittance (DF) and parallel light transmittance (PT) of a coating film formed and cured on a smooth polytetrafluoroethylene (PTFE) plate, and peeled off from the plate. The DF and PT of the coating film are measured using a COH-300A turbidimeter (trade name, produced by Nippon Denshoku Industries Co., Ltd.).

$$\text{Formula: Haze value} = 100*DF/(DF+PT)$$

Hydroxy-containing Resin (y1)

The hydroxy-containing resin (y1) is a resin with at least one hydroxy group per molecule. Examples of the hydroxy-containing resin (y1) include hydroxy-containing acrylic resins, hydroxy-containing polyester resins, hydroxy-containing polyurethane resins, hydroxy-containing polyolefin resins, hydroxy-containing polyether resins, hydroxy-containing polycarbonate resins, hydroxy-containing epoxy resins, and hydroxy-containing alkyd resins. These may be used singly or in a combination of two or more.

The hydroxy-containing resin (y1) for use is preferably a hydroxy-containing acrylic resin (y11), a hydroxy-containing polyester resin (y12), and a hydroxy-containing polyurethane resin (y13) from the standpoint of water resistance, chipping resistance and finished appearance of the formed multilayer coating film.

The content of the hydroxy-containing resin (y1) in the transparent colored second base paint (Y) is preferably within a range of 1 to 100 mass%, more preferably 10 to 90 mass%, and even more preferably 20 to 80 mass%, based on the total resin solids content in the transparent colored second base paint (Y).

The transparent colored second base paint (Y) preferably contains a crosslinking agent that is reactive with the hydroxy groups of the hydroxy-containing resin (y1) from the standpoint of water resistance, chipping resistance and finished appearance of the formed multilayer coating film.

The crosslinking agent for use is preferably an amino resin, a polyisocyanate compound, and a blocked polyisocyanate compound from the standpoint of water resistance and adhesion of the formed multilayer coating film.

Of these, from the standpoint of storage stability of the obtained transparent colored second base paint (Y) and water resistance and adhesion of the formed multilayer coating film, the crosslinking agent preferably contains an amino resin and/or a blocked polyisocyanate compound, more preferably an amino resin, and particularly preferably a melamine resin.

The amino resin, melamine resin, polyisocyanate compound, and blocked polyisocyanate compound may be those described in the "Color Paint (W)" section above.

Preferred examples of melamine resins include methyl etherified melamine resins obtained by etherifying some or all of the methylol groups of a partially or fully methylolated melamine resin with methyl alcohol, butyl etherified melamine resins obtained by etherifying some or all of the methylol group of a partially or fully methylolated melamine resin with butyl alcohol, and methyl-butyl mixed etherified melamine resins obtained by etherifying some or all of the methylol groups of a partially or fully methylolated melamine resin with methyl alcohol and butyl alcohol. Methyl-butyl mixed etherified melamine resins are more preferred.

The melamine resin preferably has a weight average molecular weight within a range of 400 to 6000, more preferably 700 to 4000, and even more preferably 1000 to 3000.

When the transparent colored second base paint (Y) contains the crosslinking agent, the content of the crosslinking agent is preferably within a range of 1 to 50 mass%, more preferably 5 to 45 mass%, and even more preferably 10 to 40 mass%, based on the total resin solids content in the transparent colored second base paint (Y).

When the transparent colored second base paint (Y) contains the hydroxy-containing resin (y1) and a crosslinking agent, the content ratio of the hydroxy-containing resin (y1) and the crosslinking agent is such that the hydroxy-containing resin (y1) is preferably within a range of 30 to 99 mass%, more preferably 50 to 95 mass%, and even more preferably 55 to 90 mass%; and the crosslinking agent is preferably within a range of 1 to 70 mass%, more preferably 5 to 50 mass%, and even more preferably 10 to 45 mass%, based on the total solids content of the hydroxy-containing resin (y1) and the crosslinking agent, from the standpoint of water resistance, chipping resistance and finished appearance of the formed multilayer coating film.

Color Pigment (y2)

The transparent colored second base paint (Y) contains a color pigment (y2).

From the standpoint of obtaining a vivid multilayer coating film with metallic luster, the color pigment (y2) preferably contains at least one member selected from the group consisting of a red pigment, a yellow pigment, a green pigment, and a blue pigment.

Examples of the red pigment include azo pigments, such as iron oxide pigments, azo lake pigments, insoluble azo pigments, and condensed azo pigments; anthanthrone pigments; anthraquinone pigments; perylene pigments; quinacridone pigments; diketopyrrolopyrrole pigments; and dioxazine pigments.

Examples of the yellow pigment include bismuth vanadate, chrome yellow, monoazo pigments, disazo pigments, benzimidazolone pigments, isoindolinone pigments, isoindoline pigments, quinophthalone pigments, azomethine pigments, and anthrone pigments.

Examples of the green pigment include phthalocyanine pigments and azomethine pigments.

Examples of the blue pigment include phthalocyanine pigments, threne pigments, indigoid pigments, Prussian blue pigments, and cobalt blue pigments.

These color pigments (y2) may be used singly or in a combination of two or more.

From the standpoint of, for example, obtaining a vivid multilayer coating film with metallic luster, the content of the color pigment (y2) is preferably within a range of 1 to 10 parts by mass, and more preferably within a range of 2 to 8 parts by mass, based on 100 parts by mass of the resin solids content in the transparent colored second base paint (Y).

The transparent colored second base paint (Y) may further appropriately contain, if necessary, a resin that does not contain a hydroxy group, an extender pigment, an effect pigment, an organic solvent, a pigment dispersant, a pigment derivative, an anti-settling agent, an antifoaming agent, an ultraviolet absorber, a light stabilizer.

Examples of the extender pigment include talc, silica, calcium carbonate, barium sulfate, and zinc oxide.

When the transparent colored second base paint (Y) contains the extender pigment, the content is preferably 30 parts by mass or less, and more preferably within a range of 0.1 to 20 parts by mass, based on 100 parts by mass of the resin solids content in the transparent colored second base paint (Y).

Examples of the effect pigments include aluminum (including vapor-deposition aluminum), copper, zinc, brass, nickel, glass flakes, aluminum oxide, mica, aluminum oxide coated with titanium oxide and/or iron oxide, and mica coated with titanium oxide and/or iron oxide.

When the transparent colored second base paint (Y) contains the effect pigment, the content is preferably 30 parts by mass or less, and more preferably within a range of 0.1 to 20 parts by mass, based on 100 parts by mass of the resin solids content in the transparent colored second base paint (Y).

The transparent colored second base paint (Y) can be applied by a usual method. Examples include air-spray coating, airless spray coating, rotary-atomization coating, and like methods. When the transparent colored second base paint (Y) is applied, electrostatic charge may be applied, if necessary. In particular, rotary-atomization electrostatic coating and air-spray electrostatic coating are preferable, with rotary-atomization electrostatic coating being particularly preferable.

When air-spray coating, airless spray coating, or rotary-atomization coating is performed, the transparent colored second base paint (Y) is preferably adjusted to have a solids content and a viscosity suitable for coating by appropriately adding water and/or an organic solvent, and optional additives such as a rheology control agent and an antifoaming agent.

The solids content of the transparent colored second base paint (Y) is preferably within a range of 10 to 60 mass%, more preferably 15 to 55 mass%, and even more preferably 20 to 50 mass%. It is also preferred that the viscosity of the transparent colored second base paint (Y) be suitably adjusted with water and/or an organic solvent to a range suitable for coating, which is typically 500 to 5000 mPa·s as measured with a Brookfield viscometer at a rotational speed of 6 rpm at 20°C.

The transparent colored second base coating film has a thickness of preferably about 3.0 to 30 $\mu$m, more preferably 4.0 to 25 $\mu$m, and even more preferably about 5 to 20 $\mu$m, on a cured film basis, from the standpoint of, for example, obtaining a vivid multilayer coating film with metallic luster and excellent water resistance.

Step (4)

According to the method for forming a multilayer coating film of the present invention, a clear paint (Z) is subsequently applied to the transparent colored second base coating film formed in step (3) to form a clear coating film. The clear paint (Z) contains a hydroxy-containing acrylic resin (z1) and a polyisocyanate compound (z2), and the polyisocyanate compound (z2) contains an aliphatic triisocyanate compound (z2-1) having a molecular weight within a range of 200 to 350, as at least one of the polyisocyanate compound (z2).

Hydroxy-containing Acrylic Resin (z1)

The hydroxy-containing acrylic resin (z1) is an acrylic resin that contains at least one hydroxy group per molecule.

The hydroxy-containing acrylic resin (z1) can be produced, for example, by copolymerizing a hydroxy-containing polymerizable unsaturated monomer and another polymerizable unsaturated monomer that is copolymerizable with the hydroxy-containing polymerizable unsaturated monomer by a known method, such as a solution polymerization method in an organic solvent or an emulsion polymerization method in water. Of these, the production is preferably performed by a solution polymerization method in an organic solvent.

The hydroxy-containing polymerizable unsaturated monomer and another polymerizable unsaturated monomer that is copolymerizable with the hydroxy-containing polymerizable unsaturated monomer for use may be, for example, the polymerizable unsaturated monomers described in the "Hydroxy-containing Acrylic Resin (x11)" section above.

In the production of the hydroxy-containing acrylic resin (z1), the amount of the hydroxy-containing polymerizable unsaturated monomer for use is preferably within a range of 15 to 50 mass%, and more preferably 20 to 40 mass%, based on the total amount of the copolymerized monomer components, from the standpoint of water resistance, chipping resistance, and finished appearance of the formed multilayer coating film.

The hydroxy value of the hydroxy-containing acrylic resin (z1) is preferably within a range of 50 to 210 mg KOH/g, more preferably 80 to 200 mg KOH/g, and even more preferably 100 to 170 mg KOH/g, from the standpoint of water resistance, chipping resistance and finished appearance of the formed multilayer coating film.

Further, the weight average molecular weight of the hydroxy-containing acrylic resin (z1) is preferably within a range of 2000 to 50000, more preferably 3000 to 30000, and even more preferably 4000 to 10000, from the standpoint of water resistance, chipping resistance, and finished appearance of the formed multilayer coating film.

The acid value of the hydroxy-containing acrylic resin (z1) is preferably 30 mg KOH/g or less, and more preferably within a range of 1 to 20 mg KOH/g, from the standpoint of the finished appearance and water resistance of the formed multilayer coating film, and the pot life etc. of the clear paint (Z).

The glass transition temperature of the hydroxy-containing acrylic resin (z1) is preferably within a range of - 50 to 60°C, more preferably 10 to 50°C, and even more preferably 20 to 45°C, from the standpoint of water resistance, chipping resistance, and finished appearance of the formed multilayer coating film.

In the present specification, the glass transition temperature (°C) of the acrylic resin is calculated using the following formulae.

$$1/Tg\,(K) = (W1/T1) + (W2/T2) + \,..... (1)$$

$$Tg\,(°C) = Tg\,(K) - 273 \quad (2)$$

In each formula, W1, W2, ... represent the mass fractions of the monomers used for copolymerization, and T1, T2, ... represent the Tg (K) of homopolymers of each of the monomers.

T1, T2, ... are the values disclosed in the Polymer Handbook (Second Edition, J. Brandrup and E.H. Immergut ed.) III-139 to 179. When the Tg of the homopolymer of a monomer is unclear, the glass transition temperature (°C) refers to a static glass transition temperature. For example, a sample is taken in a measuring cup and subjected to vacuum suction to completely remove the solvent, followed by measurement of changes in the quantity of heat at a heating rate of 3°C/min in a temperature range of -20 to +200°C using a DSC-220U differential scanning calorimeter (produced by Seiko Instruments Inc.). The initial change point in the baseline at the low-temperature side is considered to be the static glass transition temperature.

The method for copolymerizing the polymerizable unsaturated monomer mixture to obtain the hydroxy-containing acrylic resin (z1) is particularly preferably a solution polymerization method, in which polymerization is conducted in an organic solvent in the presence of a polymerization initiator.

Examples of organic solvents for use in the solution polymerization method include toluene, xylene, Swasol 1000 (trade name, produced by Cosmo Oil Co., Ltd., an oil-based high-boiling-point solvent), and like aromatic-based solvents; ethyl acetate, butyl acetate, propyl propionate, butyl propionate, 1-methoxy-2-propyl acetate, 2-ethoxyethyl propionate, 3-methoxybutyl acetate, ethylene glycol ethyl ether acetate, propylene glycol methyl ether acetate, and like ester-based solvents; methyl ethyl ketone, methyl isobutyl ketone, methyl amyl ketone, and like ketone-based solvents; and isopropanol, n-butanol, iso-butanol, 2-ethyl hexanol, and like alcohol-based solvents.

These organic solvents may be used singly or in a combination of two or more. From the viewpoint of the solubility of the acrylic resin, ester-based solvents and ketone-based solvents are preferable. Further, an aromatic-based solvent may be suitably used in combination.

Examples of polymerization initiators usable in copolymerization of the hydroxy-containing acrylic resin (z1) include known radical polymerization initiators, such as 2,2'-azobisisobutyronitrile, benzoyl peroxide, di-t-butyl peroxide, di-t-amyl peroxide, t-butyl peroctoate, 2,2'-azobis(2-methylbutyronitrile), and 2,2'-azobis(2,4-dimethylvaleronitrile).

The hydroxy-containing acrylic resins (z1) may be used singly or in a combination of two or more.

Polyisocyanate Compound (z2)

The clear paint (Z) according to the present invention contains a polyisocyanate compound (z2), and the polyisocyanate compound (z2) contains an aliphatic triisocyanate compound (z2-1) having a molecular weight within a range of 200 to 350, as at least one of the polyisocyanate compound (z2).

Aliphatic Triisocyanate Compound (z2-1)

The aliphatic triisocyanate compound (z2-1) is an aliphatic polyisocyanate compound having a molecular weight within a range of 200 to 350 and containing three isocyanate groups. In particular, from the standpoint of water resistance etc. of the formed multilayer coating film, the molecular weight is preferably within a range of 200 to 300, and more preferably within a range of 230 to 280.

Specific examples of the aliphatic triisocyanate compound (z2-1) include 1,8-diisocyanato-4-isocyanatomethyloctane, 2-isocyanatoethyl (2S)-2,6-diisocyanatohexanoate (common name: lysine triisocyanate), 2-isocyanatoethyl 2,6-diisocyanatohexanoate, and 1,6,11-triisocyanatoundecane. These may be used singly or in a combination of two or more.

In particular, the aliphatic triisocyanate compound (z2-1) for use is preferably 1,8-diisocyanato-4-isocyanatomethyloctane and 2-isocyanatoethyl (2S)-2,6-diisocyanatohexanoate (common name: lysine triisocyanate), and particularly preferably 1,8-diisocyanato-4-isocyanatomethyloctane, from the standpoint of water resistance of the formed multilayer coating film.

Further, the aliphatic triisocyanate compound (z2-1) preferably has a viscosity at 23°C within a range of 1 to 50 mPa·s, and more preferably 1 to 30 mPa·s, from the standpoint of water resistance of the formed multilayer coating film.

As the polyisocyanate compound (z2), the clear paint (Z) may further optionally contain a polyisocyanate compound other than the aliphatic triisocyanate compound (z2-1), which has a molecular weight within a range of 200 to 350.

Polyisocyanate Compound Other Than Aliphatic Triisocyanate Compound (z2-1)

Examples of the polyisocyanate compound other than the aliphatic triisocyanate compound (z2-1) include aliphatic polyisocyanate compounds other than the aliphatic triisocyanate compound (z2-1), alicyclic polyisocyanate compounds, aromatic-aliphatic polyisocyanate compounds, aromatic polyisocyanate compounds, and derivatives of the polyisocyanate compounds.

Examples of the aliphatic polyisocyanate compound other than the aliphatic triisocyanate compound (z2-1) include aliphatic diisocyanates, such as trimethylene diisocyanate, tetramethylene diisocyanate, hexamethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, dimer acid diisocyanate, and methyl 2,6-diisocyanatohexanoate (common name: lysine diisocyanate).

Examples of the alicyclic polyisocyanate compound include alicyclic diisocyanates, such as 1,3-cyclopentene diisocyanate, 1,4-cyclohexane diisocyanate, 1,3-cyclohexane diisocyanate, 3-isocyanatomethyl-3,5,5-trimethylcyclohexyl isocyanate (common name: isophorone diisocyanate), 4,4'-methylenebis(cyclohexyl isocyanate), methyl-2,4-cyclohexane diisocyanate, methyl-2,6-cyclohexane diisocyanate, 1,3- or 1,4-bis(isocyanatomethyl)cyclohexane (common name: hydrogenated xylylene diisocyanate) or mixtures thereof, and norbornane diisocyanate; and alicyclic triisocyanates, such as 1,3,5-triisocyanatocyclohexane, 1,3,5-trimethylisocyanatocyclohexane, 2-(3-isocyanatopropyl)-2,5-di(isocyanatomethyl)-bicyclo(2.2.1)heptane, 2-(3-isocyanatopropyl)-2,6-di(isocyanatomethyl)-bicyclo(2.2.1)heptane, 3-(3-isocyanatopropyl)-2,5-di(isocyanatomethyl)-bicyclo(2.2.1)heptane, 5-(2-isocyanatoethyl)-2-isocyanatomethyl-3-(3-isocyanatopropyl)-bicyclo(2.2.1)heptane, 6-(2-isocyanatoethyl)-2-isocyanatomethyl-3-(3-isocyanatopropyl)-bicyclo(2.2.1)heptane, 5-(2-isocyanatoethyl)-2-isocyanatomethyl-2-(3-isocyanatopropyl)-bicyclo(2.2.1)heptane, and 6-(2-isocyanatoethyl)-2-isocyanatomethyl-2-(3-isocyanatopropyl)-bicyclo(2.2.1)heptane.

Examples of the aromatic-aliphatic polyisocyanate compound include aromatic-aliphatic diisocyanates, such as 1,3- or 1,4-xylylene diisocyanate or mixtures thereof, $\omega,\omega$-diisocyanato-1,4-diethylbenzene, and 1,3- or 1,4-bis(1-isocyanato-1-methylethyl)benzene (common name: tetramethylxylylene diisocyanate) or mixtures thereof; and aromatic-aliphatic triisocyanates, such as 1,3,5-triisocyanatomethylbenzene.

Examples of the aromatic polyisocyanate compound include aromatic diisocyanates, such as m-phenylene diisocyanate, p-phenylene diisocyanate, 4,4'-diphenyl diisocyanate, 1,5-naphthalene diisocyanate, 2,4'- or 4,4'-diphenylmethane diisocyanate or mixtures thereof, 2,4- or 2,6-tolylene diisocyanate or mixtures thereof, 4,4'-toluidine diisocyanate, and 4,4'-diphenylether diisocyanate; aromatic triisocyanates, such as triphenylmethane-4,4',4'''-triisocyanate, 1,3,5-triisocyanatobenzene, and 2,4,6-triisocyanatotoluene; and aromatic tetraisocyanates, such as 4,4'-diphenylmethane-2,2',5,5'-tetraisocyanate.

Examples of derivatives of the polyisocyanate compounds include dimers, trimers, biurets, allophanates, carbodiimides, uretdiones, urethoimines, isocyanurates, oxadiazinetriones, polymethylene polyphenyl polyisocyanates (crude MDI, polymeric MDI), and crude TDI of the polyisocyanate compounds stated above.

In the clear paint (Z), the equivalent ratio (NCO/OH) of the total mol of the isocyanate groups in the polyisocyanate compound (z2) to the total mol of the hydroxy groups in the hydroxy-containing acrylic resin (z1) is preferably within a range of 1.1 to 2.5, more preferably 1.3 to 2.3, and even more preferably 1.5 to 2.0, from the standpoint of water resistance etc. of the formed multilayer coating film.

In the present invention, the content of the aliphatic triisocyanate compound (z2-1) in the polyisocyanate compound (z2) is preferably within a range of 30 to 100 mass%, more preferably 50 to 100 mass%, and even more preferably 70 to 100 mass%, based on the total solids content in the polyisocyanate compound (z2), from the standpoint of water resistance etc. of the formed multilayer coating film.

The clear paint (Z) may further appropriately contain, if necessary, a solvent such as water and an organic solvent; and a resin other than the hydroxy-containing acrylic resin (z1), a curing catalyst, an antifoaming agent, an ultraviolet absorber, a rheology control agent, an anti-settling agent, and other additives for paint.

The clear paint (Z) may also suitably contain a color pigment to the extent that the transparency of the coating film is not impaired. The color pigment for use can be a known pigment for ink or paint, and these pigments can be used singly or in a combination of two or more. Although the amount of the color pigment for use varies, for example, depending on the type of color pigment for use, the amount of the color pigment is preferably 30 mass% or less, more preferably within a range of 0.05 to 20 mass%, and even more preferably 0.1 to 10 mass% based on the total solids content in the resin component in the clear paint.

The clear paint (Z) can be applied by a method such as electrostatic coating, air spray coating, and airless spray coating. The film thickness of the clear coating film is about 10 to 60 $\mu$m, more preferably 15 to 50 $\mu$m, and even more preferably about 20 to 40 $\mu$m on a cured coating film basis.

The solids content of the clear paint (Z) is preferably within a range of 10 to 65 mass%, more preferably 15 to 55 mass%, and even more preferably 20 to 50 mass%. Further, it is preferred that the viscosity of the clear paint (Z) be suitably adjusted with water and/or an organic solvent to a range suitable for coating, which is typically about 15 to 60 seconds, and particularly about 20 to 50 seconds as measured with a Ford cup No. 4 viscometer at 20°C.

Step (5)

According to the method for forming a multilayer coating film of present invention, the multilayer coating film containing the effect first base coating film, the transparent colored second base coating film, and the clear coating film formed in steps (2) to (4) is subsequently heated to simultaneously cure the multilayer coating film.

When the colored coating film obtained by applying the color paint (W) is not heat-cured in step (1), it is possible, in this step (5), to simultaneously heat the colored coating film, the effect first base coating film, the transparent colored second base coating film, and the clear coating film formed in steps (1) to (4) to cure the multilayer coating film containing these four coating films all at once. In this case, energy saving properties can be further improved since heat-curing can be omitted once.

The heating may be conducted by, for example, hot-air heating, infrared heating, or high-frequency heating. The heating temperature is preferably 80 to 160°C, and more preferably 100 to 140°C. The heating time is preferably 10 to 60 minutes, and more preferably 15 to 40 minutes. If necessary, heating may be performed directly or indirectly at a temperature of preferably about 50 to 110°C, and more preferably about 60 to 90°C for about 1 to 60 minutes by preheating, air blowing, or other means, before carrying out the heat-curing mentioned above.

Examples

The present invention is more specifically described below with reference to Production Examples, Examples, and Comparative Examples. However, these Production Examples, Examples, and Comparative Examples are merely examples, and are not intended to limit the scope of the present invention. The units "parts" and "%" in the Production Examples, Examples, and Comparative Examples are based on mass unless otherwise indicated. The film thickness of a coating film is based on a cured coating film.

1. Production of Base Material

Elecron GT-10 cationic electrodeposition paint (trade name, produced by Kansai Paint Co., Ltd., an epoxy resin polyamine-based cationic resin containing a blocked polyisocyanate compound as a curing agent) was applied by electrodeposition to a degreased and zinc phosphate-treated steel plate (JISG3141, size: 400 mm x 300 mm x 0.8 mm) to a film thickness of 20 $\mu$m on a cured coating film basis. The resulting film was heated at 170°C for 20 minutes to be cured by crosslinking to form an electrodeposition coating film, thereby obtaining a substrate.

2. Preparation of Paint

Production of Hydroxy-Containing Resin (w1)

Production of Water-dispersible Hydroxy-containing Acrylic Resin (w11-1)

Production Example 1

70.7 parts of deionized water and 0.52 parts of Aqualon KH-10 (trade name, produced by DKS Co., Ltd., emulsifier, active ingredient: 97%) were placed into a reaction vessel equipped with a thermometer, a thermostat, a stirrer, a reflux condenser, and a dropping funnel; and mixed and stirred in a nitrogen stream, followed by heating to 80°C. Subsequently, 1% of the entire monomer emulsion described below and 5 parts of a 6% ammonium persulfate aqueous solution were introduced into the reactor vessel, and the mixture was maintained at 80°C for 15 minutes. Thereafter, the remaining monomer emulsion was added dropwise over a period of 3 hours to the reaction vessel maintained at the same temperature. After completion of the dropwise addition, the mixture was aged for 1 hour. Thereafter, while 40 parts of a 5% 2-(dimethylamino)ethanol aqueous solution was gradually added to the reaction vessel, the reaction product was cooled to 30°C and discharged while being filtered through a 100-mesh nylon cloth, thereby obtaining a water-dispersible hydroxy-containing acrylic resin (w11-1) with a solids concentration of 45%. The obtained water-dispersible hydroxy-containing acrylic resin had a hydroxy value of 43 mg KOH/g and an acid value of 12 mg KOH/g.

Monomer Emulsion: 50 parts of deionized water, 10 parts of styrene, 40 parts of methyl methacrylate, 35 parts of ethyl acrylate, 3.5 parts of n-butyl methacrylate, 10 parts of 2-hydroxy ethyl methacrylate, 1.5 parts of acrylic acid, 1.0 part of Aqualon KH-10, and 0.03 parts of ammonium persulfate were mixed with stirring, thereby obtaining a monomer emulsion.

Production of Hydroxy-Containing Polyester Resin Solution (w12-1)

Production Example 2

174 parts of trimethylolpropane, 327 parts of neopentyl glycol, 352 parts of adipic acid, 109 parts of isophthalic acid, and 101 parts of 1,2-cyclohexanedicarboxylic anhydride were placed in a reaction vessel equipped with a thermometer, a thermostat, a stirrer, a reflux condenser, and a water separator; and the temperature was increased from 160° to 230°C over a period of 3 hours. Thereafter, the temperature was maintained at 230°C while the generated condensed water was distilled off with the water separator to allow the reaction to proceed until the acid value reached 3 mg KOH/g or less. 59 parts of trimellitic anhydride was added to this reaction product, and addition reaction was performed at 170°C for 30 minutes, followed by cooling to 50°C or less. 2-(dimethylamino)ethanol in an equivalent amount to acid groups was added thereto to neutralize the reaction product; and then deionized water was gradually added, thereby obtaining a hydroxy-containing polyester resin solution (w12-1) with a solids concentration of 45%. The obtained hydroxy-containing polyester resin had a hydroxy value of 128 mg KOH/g, an acid value of 35 mg KOH/g, and a weight average molecular weight of 13000.

Production of Pigment Dispersion (P-1)

Production Example 3

56 parts (solids content: 25 parts) of the hydroxy-containing polyester resin solution (w12-1) obtained in Production Example 2, 70 parts of Tipaque UT-771 (trade name, a rutile titanium dioxide pigment, produced by Ishihara Sangyo Kaisha, Ltd.), 0.5 parts of Carbon MA-100 (trade name, a carbon black pigment, produced by Mitsubishi Chemical Corporation), and 5 parts of deionized water were mixed; and the mixture was adjusted to a pH of 8.0 with 2-(dimethylamino)ethanol. Subsequently, the obtained mixture was placed in a wide-mouth glass bottle, and glass beads (diameter: about 1.3 mm) as dispersion media were added thereto. The bottle was hermetically sealed, and dispersing was performed with a paint shaker for 30 minutes, thereby obtaining a pigment dispersion (P-1).

Production of Color Paint (W-1)

Production Example 4

131.5 parts of the pigment dispersion paste (P-1) obtained in Production Example 3, 44.4 parts (solids content: 20 parts) of the water-dispersible hydroxy-containing acrylic resin (w11-1) obtained in Production Example 1, 71.4 parts (solids content: 25 parts) of UCOAT UX-8100 (trade name, a urethane emulsion, produced by Sanyo Chemical Industries, Ltd., solids content: 35%), and 37.5 parts (solids content: 30 parts) of Cymel 325 (trade name, a melamine resin, produced by Allnex Japan Inc., solids content: 80%) were homogeneously mixed. Subsequently, UH-752 (trade name, produced by ADEKA Corporation, a thickening agent), 2-(dimethylamino)ethanol, and deionized water were added to the obtained mixture, thereby obtaining a color paint (W-1) with a pH of 8.0, a paint solids content of 25%, and a viscosity of 3000 mPa·s as measured with a Brookfield viscometer at 20°C at a rotational speed of 6 rpm.

Production of Hydroxy-containing Resin (x1)

Production of Water-dispersible Hydroxy-containing Acrylic Resin (x111'-1) with Core-shell Multilayer Structure

Production Example 5

145 parts of deionized water and 0.52 parts of Aqualon KH-10 were placed in a reaction vessel equipped with a thermometer, a thermostat, a stirrer, a reflux condenser, and a dropping funnel; and stirred and mixed in a nitrogen airstream, followed by heating to 80°C. Subsequently, 1% of the entire amount of the following monomer emulsion (1) and 5.3 parts of a 6% ammonium persulfate aqueous solution were placed in the reaction vessel and maintained at 80°C for 15 minutes. Thereafter, the remaining monomer emulsion (1) was added dropwise into the reaction vessel maintained at the same temperature over a period of 3 hours. After completion of the dropwise addition, the mixture was aged for 1 hour. Subsequently, the following monomer emulsion (2) was added dropwise over a period of 1 hour, followed by aging for 1 hour. Thereafter, while 40 parts of a 5% dimethylethanol amine aqueous solution was gradually added to the reaction vessel, the reaction product was cooled to 30°C and discharged while being filtered through a 100-mesh nylon cloth, thereby obtaining a water-dispersible hydroxy-containing acrylic resin (x111'-1) with a core-shell multilayer structure having a solids concentration of 28%. The obtained water-dispersible hydroxy-containing acrylic resin (x111'-1) with a core-shell multilayer structure had a hydroxy value of 25 mg KOH/g and an acid value of 33 mg KOH/g.

Monomer emulsion (1): 47 parts of deionized water, 0.72 parts of Aqualon KH-10, 2.1 parts of methylenebisacrylamide, 2.8 parts of styrene, 16.1 parts of methyl methacrylate, 28 parts of ethyl acrylate, and 21 parts of n-butyl acrylate were mixed with stirring, thereby obtaining monomer emulsion (1).

Monomer emulsion (2): 23 parts of deionized water, 0.31 parts of Aqualon KH-10, 0.03 parts of ammonium persulfate, 5.1 parts of methacrylic acid, 5.1 parts of 2-hydroxyethyl acrylate, 3 parts of styrene, 6 parts of methyl methacrylate, 1.8 parts of ethyl acrylate, and 9 parts of n-butyl acrylate were mixed with stirring, thereby obtaining monomer emulsion (2).

Production of Effect Pigment Dispersions (X-1) to (X-9)

Production Example 6

50.1 parts of distilled water, 25.5 parts (solids content: 0.5 parts) of Rheocrysta (trade name, produced by DKS Co. Ltd., cellulose nanofibers, solids content: 2%), 0.3 parts (solids content: 0.3 parts) of Dynol-604 (trade name, produced by Evonik Industries AG, an acetylene-diol-based surface-adjusting agent, solids content: 100%), 12.1 parts (solids content: 1.2 parts) of Hydroshine WS-3001 (trade name, an aqueous vapor-deposition aluminum flake pigment, produced by Eckart, solids content: 10%, internal solvent: isopropanol, average particle size D50: 13 $\mu$m, thickness: 0.05 $\mu$m; the surface is treated with silica), 2.5 parts (solids content: 0.7 parts) of the water-dispersible hydroxy-containing acrylic resin (x111'-1) with a core-shell multilayer structure obtained in Production Example 5, 0.3 parts (solids content: 0.1 parts ) of Tinuvin 479-DW(N) (trade name, produced by BASF, an ultraviolet absorber, solids content: 40%), 0.2 parts (solids content: 0.1 parts) of Tinuvin 123-DW(N) (trade name, produced by BASF, light stabilizer, solids content: 50%), 0.5 parts of 2-ethyl hexanol, and 8.5 parts of isopropyl alcohol were added to a stirring vessel. The mixture was stirred and mixed, thereby obtaining an effect pigment dispersion (X-1).

Production Examples 7 to 13

Effect pigment dispersions (X-2) to (X-8) were obtained in the same manner as in Production Example 6, except that the formulations shown in Table 1 were used.

Table 1

| Numerical values in parentheses are solids content | | | | | | | | | | |
|---|---|---|---|---|---|---|---|---|---|---|
| Production Example No. | | | 6 | 7 | 8 | 9 | 10 | 11 | 12 | 13 |
| Effect pigment dispersion (X) name | | | X-1 | X-2 | X-3 | X-4 | X-5 | X-6 | X-7 | X-8 |
| Formulation | Distilled water | | 50.1 | 46.9 | 54.8 | 52.7 | 49.9 | 54.8 | 55.9 | 47.4 |
| | Rheology control agent | Rheocrysta | 25.5 (0.5) | 24.0 (0.5) | 28.0 (0.6) | 26.9 (0.5) | 25.5 (0.5) | 28.0 (0.6) | 28.5 (0.6) | 24.2 (0.5) |
| | Surface-adjusting agent | Dynol-604 | 0.3 (0.3) | 0.2 (0.2) | 0.3 (0.3) | 0.3 (0.3) | 0.3 (0.3) | 0.3 (0.3) | 0.3 (0.3) | 0.2 (0.2) |

(continued)

| Numerical values in parentheses are solids content | | | | | | | | | | |
|---|---|---|---|---|---|---|---|---|---|---|
| Production Example No. | | | 6 | 7 | 8 | 9 | 10 | 11 | 12 | 13 |
| | Effect pigment (x2) | Hydroshine WS-3001 | 12.1 (1.2) | 17.6 (1.8) | 3.7 (0.4) | | | | 1.9 (0.2) | |
| | | Alpaste EMR-B6360 (Note 1) | | | | 7.5 (3.6) | 12.4 (5.9) | 3.7 (1.8) | | 16.8 (8.1) |
| | Hydroxy-containing resin (x1) | Water-dispersible hydroxy-containing acrylic resin (x111'-1) with core-shell multilayer structure | 2.5 (0.7) | 2.3 (0.6) | 2.7 (0.8) | 2.6 (0.7) | 2.4 (0.7) | 2.7 (0.8) | 2.7 (0.8) | 2.3 (0.7) |
| | Ultraviolet absorber | Tinuvin 479-DW (N) | 0.3 (0.1) | 0.3 (0.1) | 0.4 (0.2) | 0.4 (0.1) | 0.3 (0.1) | 0.4 (0.2) | 0.4 (0.2) | 0.3 (0.1) |
| | Light stabilizer | Tinuvin 123-DW (N) | 0.2 (0.1) | 0.2 (0.1) | 0.2 (0.1) | 0.2 (0.1) | 0.2 (0.1) | 0.2 (0.1) | 0.3 (0.1) | 0.2 (0.1) |
| | Solvent | 2-Ethyl hexanol | 0.5 | 0.5 | 0.6 | 0.5 | 0.5 | 0.6 | 0.6 | 0.5 |
| | | Isopropyl alcohol | 8.5 | 8.0 | 9.3 | 9.0 | 8.5 | 9.3 | 9.5 | 8.1 |
| Property | Solids content (%) | | 2.9 | 3.4 | 2.2 | 5.4 | 7.6 | 3.6 | 2.1 | 9.7 |
| | Amount of effect pigment based on 100 parts by mass of the solids content in effect pigment dispersion (X) (parts by mass) | | 41.6 | 52.4 | 16.7 | 66.7 | 77.8 | 48.7 | 9.1 | 83.3 |
| Note 1: Alpaste EMR-B6360: trade name, produced by Toyo Aluminium K.K., an aluminum flake pigment, solids content: 48%, | | | | | | | | | | |

Production Example 14

GX-3100 (trade name, produced by Asahi Kasei Corporation, aluminum flakes, solids content: 74 mass%, average particle size: 10 $\mu$m) was added to WBC-713T Enamel Clear (trade name, produced by Kansai Paint Co., Ltd., an aqueous base paint, colorless transparent) so that the content of GX-3100 was 8 parts by mass based on 100 parts by mass of the total solids content. The mixture was stirred, thereby obtaining an effect pigment dispersion (X-9).

Production Hydroxy-containing Resin (y1)

Production of Hydroxy-containing Acrylic Resin Solution (y11-1)

Production Example 15

35 parts of propylene glycol monopropyl ether was placed in a reaction vessel equipped with a thermometer, a thermostat, a stirrer, a reflux condenser, a nitrogen inlet tube, and a dropping funnel; and heated to 85ºC. A mixture of 30 parts of methyl methacrylate, 20 parts of 2-ethylhexyl acrylate, 29 parts of n-butyl acrylate, 15 parts of 2-hydroxyethyl acrylate, 6 parts of acrylic acid, 15 parts of propylene glycol monopropyl ether, and 2.3 parts of 2,2'-azobis(2,4-dimethylvaleronitrile) was then added dropwise thereto over a period of 4 hours. After completion of the dropwise addition, the mixture was aged for 1 hour. Further, a mixture of 10 parts of propylene glycol monopropyl ether and 1 part of 2,2'-azobis(2,4-dimethylvaleronitrile) was added dropwise thereto over a period of 1 hour. After completion of the dropwise addition, the mixture was aged for 1 hour. Further, 7.4 parts of diethanolamine was added thereto, thereby obtaining a hydroxy-containing acrylic resin solution (y11-1) having a solids content of 55%. The obtained hydroxy-containing acrylic resin had an acid value of 47 mg KOH/g, a hydroxy value of 72 mg KOH/g, and a weight average molecular weight of 58000.

Production of Hydroxy-containing Polyester Resin Solution (y12-1)

Production Example 16

109 parts of trimethylolpropane, 141 parts of 1,6-hexanediol, 126 parts of 1,2-cyclohexanedicarboxylic anhydride, and 120 parts of adipic acid were placed into a reaction vessel equipped with a thermometer, a thermostat, a stirrer, a reflux condenser, and a water separator. The mixture was heated from 160°C to 230°C over a period of 3 hours, followed by a condensation reaction at 230°C for 4 hours. Subsequently, to introduce a carboxyl group to the obtained condensation reaction product, 38.3 parts of trimellitic anhydride was added to the product, followed by a reaction at 170ºC for 30 minutes. Thereafter, the product was diluted with 2-ethyl-1-hexanol, thereby obtaining a hydroxy-containing polyester resin solution (y12-1) with a solids content of 70%. The obtained hydroxy-containing polyester resin had an acid value of 46 mg KOH/g, a hydroxy value of 150 mg KOH/g, and a number average molecular weight of 1400.

Production of Pigment Dispersions (P-2) to (P-5)

Production Example 17

327 parts (solids content: 180 parts) of the hydroxy-containing acrylic resin solution (y11-1) obtained in Production Example 15, 360 parts of deionized water, 6 parts (solids content: 3 parts) of Surfynol 104A (trade name, produced by Air Products, an antifoaming agent, solids content: 50%), and 250 parts (solids content: 250 parts) of Barifine BF-20 (trade name, produced by Sakai Chemical Industry Co., Ltd., barium sulfate powder, average particle size: 0.03 $\mu$m) were placed in a paint conditioner, and a glass bead medium was added thereto. The mixture was mixed and dispersed at room temperature for 1 hour, thereby obtaining a pigment dispersion (P-2) with a solids content of 44%.

Production Example 18

182 parts (solids content: 100 parts) of the hydroxy-containing acrylic resin solution (y11-1) obtained in Production Example 15, 100 parts (solids content: 100 parts) of Chromofine Blue 5206M (trade name, produced by Dainichiseika Color & Chemicals Mfg. Co., Ltd., a phthalocyanine blue pigment), and 450 parts of deionized water were mixed. After 2-amino-2-methyl-1-propanol was added to adjust the pH to 7.5, the mixture was dispersed with a paint shaker for 2 hours to obtain a pigment dispersion (P-3) with a solids content of 27%.

Production Example 19

182 parts (solids content: 100 parts) of the hydroxy-containing acrylic resin solution (y11-1) obtained in Production Example 15, 150 parts (solids content: 150 parts) of Maroon 179 229-6438 (trade name, produced by Sun Chemical Corporation, an organic perylene pigment), and 479 parts of deionized water were mixed. After 2-amino-2-methyl-1-propanol was added to adjust the pH to 7.5, the mixture was dispersed with a paint shaker for 2 hours to obtain a pigment dispersion (P-4) with a solids content of 31%.

Production Example 20

182 parts (solids content: 100 parts) of the hydroxy-containing acrylic resin solution (y11-1) obtained in Production Example 15, 150 parts (solids content: 150 parts) of Irgazin DPP Red BO, (trade name, produced by BASF, a diketopyrrolopyrrole pigment), and 479 parts of deionized water were mixed. After 2-amino-2-methyl-1-propanol was added to adjust the pH to 7.5, the mixture was dispersed with a paint shaker for 2 hours to obtain a pigment dispersion (P-5) with a solids content of 31%.

Production of Transparent Second Base Paint (V-1)

Production Example 21

31.8 parts (solids content: 14 parts) of the pigment dispersion (P-2) obtained in Production Example 17, 107.1 parts (solids content: 30 parts) of the water-dispersible hydroxy-containing acrylic resin (x111'-1) with a core-shell multilayer structure obtained in Production Example 5, 32.9 parts (solids content: 23 parts) of the hydroxy-containing polyester resin solution (y12-1) obtained in Production Example 16, 32.5 parts (solids content: 13 parts) of U-Coat UX-310 (trade name, produced by Sanyo Chemical Industries, Ltd., a urethane resin aqueous dispersion, solids content: 40%), and 37.5 parts (solids content: 30 parts) of Cymel 251 (trade name, produced by AllnexJapan Inc., a melamine resin, solids content: 80%) were added to a stirring vessel. The mixture was stirred and mixed, thereby preparing a transparent second base paint (V-1).

Production of Transparent Colored Second Base Paints (Y-1) to (Y-2)

Production Example 22

The transparent second base paint (V-1) obtained in Production Example 21 was placed in a stirring vessel, and the pigment dispersion (P-3) obtained in Production Example 18 was added thereto so that Chromofine Blue 5206M (trade name, produced by Dainichiseika Color & Chemicals Mfg. Co., Ltd., a phthalocyanine blue pigment) was 5 parts by mass based on 100 mass parts of resin solids content. The mixture was stirred and mixed, thereby preparing a transparent blue second base paint (Y-1).

Production Example 23

The transparent second base paint (V-1) obtained in Production Example 21 was placed in a stirring vessel, and the pigment dispersion (P-4) obtained in Production Example 19 was added thereto so that Maroon 179 229-6438 (trade name, produced by Sun Chemical Corporation, an organic perylene pigment) was 5 parts by mass based on 100 parts by mass of the resin solids content. The mixture was stirred and mixed, thereby preparing a transparent red second base paint (Y-2).

Production of Colored Second Base Paint (V-2)

Production Example 24

The transparent second base paint (V-1) obtained in Production Example 21 was placed in a stirring vessel, and the pigment dispersion (P-5) obtained in Production Example 20 was added thereto so that Irgazin DPP Red BO (trade name, produced by BASF, a diketopyrrolopyrrole pigment) was 5 parts by mass based on 100 parts by mass of the resin solids content. The mixture was stirred and mixed, thereby preparing a colored red second base paint (V-2).

Evaluation of Transparent Colored Second Base Paints (Y-1) and (Y-2) and Colored Second Base Paint (V-2)

Using the transparent colored second base paints (Y-1) and (Y-2) and the colored second base paint (V-2) obtained above, the haze value of the coating films was calculated and evaluated according to the following formula based on the diffuse light transmittance (DF) and parallel light transmittance (PT) measured with a COH-300A turbidimeter (trade name, produced by Nippon Denshoku Industries Co., Ltd.).

$$\text{Formula: Haze value} = 100*DF/(DF+PT)$$

The coating films were obtained as follows. Specifically, the transparent colored second base paint (Y-1), (Y-2), or the colored second base paint (V-2) was applied to a smooth PTFE plate with a rotary electrostatic mini bell coater at a booth temperature of 23°C and at a humidity of 68% so that the coating film had a thickness of 10 μm on a cured coating film basis. The resulting film was allowed to stand at room temperature for 3 minutes, heated at 140°C for 30 minutes in a hot-air circulating oven, and peeled off from the PTEE plate, thereby obtaining a coating film. The resulting coating film of the colored second base paint (V-2) had a haze value exceeding 30%, and did not correspond to the transparent colored second base paint of the present invention.

Table 2

| Production Example No. | 22 | 23 | 24 |
|---|---|---|---|
| Paint name | Y-1 | Y-2 | V-2 |
| Haze value | 7 | 6 | 32 |

Production of Hydroxy-containing Resin (z1)

Production of Hydroxy-containing Acrylic Resin (z1-1)

Production Example 25

27 parts of Swasol 1000 (trade name, produced by Cosmo Oil Co., Ltd., an aromatic organic solvent) and 5 parts of propylene glycol monomethyl ether acetate were placed in a reaction vessel equipped with a thermometer, a thermostat, a stirrer, a reflux condenser, a nitrogen inlet tube, and a dropping funnel. While blowing nitrogen gas into the reaction vessel, the mixture was stirred at 150°C. A monomer mixture comprising 20 parts of styrene, 32.5 parts of 2-hydroxypropyl acrylate, 46.8 parts of isobutyl methacrylate, 0.7 part of acrylic acid, and 6.0 parts of ditertiary amyl peroxide (polymerization initiator) was added thereto dropwise at a constant rate over a period of 4 hours. The resulting mixture was then aged at 150°C for 1 hour, cooled, and further diluted with the addition of 21 parts of isobutyl acetate, thereby obtaining a hydroxy-containing acrylic resin (z1-1) solution having a solids concentration of 65 mass%. The obtained hydroxy-containing acrylic resin (z1-1) had a hydroxy value of 139 mg KOH/g, an acid value of 5.5 mg KOH/g, a weight average molecular weight of 5500, and a glass transition temperature of 38°C.

Production of Clear Paints (Z-1) to (Z-7)

Production Example 26

108.6 parts (solids content: 70.6 parts) of the hydroxy-containing acrylic resin (z1-1) solution obtained in Production Example 25 and 0.4 parts (solids content: 0.2 parts) of BYK-300 (trade name, produced by BYK-Chemie, a surface-adjusting agent, active ingredient: 52%) were uniformly mixed to obtain a main agent. The main agent and 29.4 parts (solids content: 29.4 parts) of 1,8-diisocyanato-4-isocyanatomethyloctane (solids content: 100%; NCO content: 50%, molecular weight: 251, viscosity at 23°C: 8 mPa·s), which is a curing agent, were uniformly mixed immediately before application. Butyl acetate was further added thereto to adjust the viscosity to 30 seconds as measured with a Ford Cup No. 4 at 20°C, thereby obtaining a clear paint (Z-1).

Production Examples 27 to 32

Clear paints (Z-2) to (Z-7) were obtained in the same manner as in Production Example 26, except that the formulations shown in Table 3 were used.

Table 3

| Production Example | | | 26 | 27 | 28 | 29 | 30 | 31 | 32 |
|---|---|---|---|---|---|---|---|---|---|
| Clear paint (Z) name | | | Z-1 | Z-2 | Z-3 | Z-4 | Z-5 | Z-6 | Z-7 |
| Hydroxy-containing acrylic resin (z1) | | Hydroxy-containing acrylic resin (z1-1) | 70.6 | 70.6 | 70.6 | 70.6 | 70.6 | 70.6 | 51 |
| Polyisocyanate compound (z2) | Aliphatic triisocyanate compound (z2-1) | 1,8-Diisocyanato-4-isocyanatomethyloctane | 29.4 | | 14.7 | | | | |
| | | Lysine triisocyanate (Note 2) | | 29.4 | | 14.7 | | | |
| | Polyisocyanate compound other than (z2-1) | Sumidur N3300 (Note 3) | | | 14.7 | 14.7 | 29.4 | | |
| | | Sumidur N3400 (Note 4) | | | | | | 29.4 | 49 |
| Surface-adjusting agent | | BYK-300 | 0.2 | 0.2 | 0.2 | 0.2 | 0.2 | 0.2 | 0.2 |

(continued)

| Production Example | 26 | 27 | 28 | 29 | 30 | 31 | 32 |
|---|---|---|---|---|---|---|---|
| Equivalent ratio (NCO/OH) of the total mol of isocyanate groups in polyisocyanate compound (z2) to the total mol of hydroxy groups in hydroxy-containing acrylic resin (z1) | 2.0 | 1.9 | 1.4 | 1.4 | 0.9 | 0.9 | 2.0 |
| Note 2: Lysine triisocyanate: solids content: 100%, NCO content: 47%, molecular weight: 267, viscosity at 23°C: 25 mPa·s<br>Note 3: Sumidur N3300: trade name, produced by Sumika Bayer Urethane Co., Ltd., isocyanurate of hexamethylene diisocyanate, solids content: 100%, NCO content: 21.8%<br>Note 4: Sumidur N3400: trade name, produced by Sumika Covestro Urethane Co., Ltd., uretdione of hexamethylene diisocyanate, solids content: 100%, NCO content: 21.8% | | | | | | | |

3. Preparation of Test Plate

Preparation of Test Plate

Example 1

Coating with Color Paint (W)

The color paint (W-1) produced in section 2 above was applied to the base material prepared in section 1 above with a rotary electrostatic mini bell coater at a booth temperature of 23°C and at a humidity of 68% such that the coating film had a thickness of 25 $\mu$m on a cured coating film basis. The resulting coating film was then allowed to stand at room temperature for 15 minutes, thereby obtaining an uncured colored coating film.

Coating with Effect Pigment Dispersion (X)

The effect pigment dispersion (X-1) produced in section 2 above was applied to the uncured colored coating film with a rotary electrostatic mini bell coater at a booth temperature of 23°C and at a humidity of 68% such that the coating film had a thickness of 1 $\mu$m on a cured coating film basis. The resulting coating film was then allowed to stand at room temperature for 2 minutes, thereby obtaining an uncured effect first base coating film.

Coating with Transparent Colored Second Base Paint (Y)

The transparent colored second base paint (Y-1) produced in section 2 above was applied to the uncured effect first base coating film with a rotary electrostatic mini bell coater at a booth temperature of 23°C and at a humidity of 68% such that the coating film had a thickness of 10 $\mu$m on a cured coating film basis. The resulting coating film was allowed to stand at room temperature for 3 minutes, and then preheated at 80°C for 3 minutes, thereby obtaining an uncured transparent colored second base coating film.

Coating with Clear Paint (Z)

The clear paint (Z-1) produced in section 2 above was applied to the uncured transparent colored second base coating film with a rotary electrostatic mini bell coater at a booth temperature of 23°C and at a humidity of 68% such that the coating film had a film thickness of 35 $\mu$m on a cured coating film basis. The coating film was then allowed to stand at room temperature for 7 minutes; and then heated in a hot-air circulating oven at 140°C for 30 minutes to cure a multilayer coating film composed of the colored coating film, the effect first base coating film, the transparent colored second base coating film, and the clear coating film by drying simultaneously, thereby preparing a test plate.
The film thickness of the dry coating film of the effect first base coating film was calculated according to the following formula. The same applies to the following Examples.

$$x = sc/sg/S * 10000$$

x: film thickness ($\mu$m)
sc: coating solids content (g)

sg: coating film specific gravity (g/cm$^3$)

S: evaluation area of coating solids content (cm$^2$)

Examples 2 to 15 and Comparative Examples 1 to 10

Test plates were obtained in the same manner as in Example 1, except that the paints and the film thicknesses were as shown in Table 4.

In Comparative Examples 7 and 8, the transparent second base paint (V-1) or the colored second base paint (V-2) was used instead of the transparent colored second base paint (Y).

Evaluation of Coating Film

The coating films on the test plates obtained in the above manner were evaluated by using the following method. Table 4 shows the results.

(1) Chroma C* (15°) in the L*C*h Color Space Diagram

The chroma C* (15°) in the L*C*h color space diagram of each test plate was measured with an MA-68II (trade name, produced by X-Rite Inc.). Larger values indicate higher chroma.

The L*C*h color space diagram is a polar coordinates version of the L*a*b* color space diagram, which was standardized in 1976 by the Commission Internationale de l'Eclairage, and also adopted in JIS Z 8781-4(2013). The value of L* represents lightness. The value of C* represents chroma, which is a distance from the starting point. The value of h represents the hue angle that starts at 0° from the axis in the a* red direction, and moves counterclockwise in terms of hue in the L*a*b* color space diagram.

The chroma C* (15°) indicates a chroma C* as measured for light received at an angle of 15 degrees deviated from a specular angle toward a measurement light when the measurement light is illuminated on the surface of an object to be measured at an angle of 45 degrees with respect to an axis perpendicular to the surface of the object to be measured.

(2) IV68

IV68 of each test plate was measured with an MA-68II (trade name, produced by X-Rite Inc.). Larger values indicate better luminance.

IV68 as used herein refers to a luminance Y value in the XYZ color space based on a spectral reflectance measured for light that is received at an angle of 15 degrees deviated from a specular angle toward a measurement light when the measurement light is illuminated on the surface of an object to be measured at an angle of 45 degrees with respect to an axis perpendicular to the surface of the object to be measured.

(3) SV68

SV68 of each test plate was measured with an MA-68II (trade name, produced by X-Rite Inc.). Smaller values indicate better orientation of an effect material.

SV68 as used herein refers to a luminance Y value in the XYZ color space based on a spectral reflectance measured for light that is received at an angle of 45 degrees deviated from a specular angle toward a measurement light when the measurement light is illuminated on the surface of an object to be measured at an angle of 45 degrees with respect to an axis perpendicular to the surface of the object to be measured.

(4) FF68

FF68 is a value obtained according to the following formula, using IV68 and SV68 above; a larger value indicates a higher flip-flop property.

$$FF68 = 2 \times (IV68 - SV68)/(IV68 + SV68)$$

(5) Initial Waterproof Adhesion

The test plates were immersed in warm water at 40°C for 240 hours, and then drawn out. Water droplets and dirt were wiped away with a cloth. Cross-cuts that reached the substrate of each test plate were then made to form a grid of 100 squares (2 mm × 2 mm) on the multilayer coating film of the plate with a utility knife at room temperature of 23ºC within 10 minutes. Subsequently, an adhesive cellophane tape was applied to the surface of the grid portion, and then abruptly peeled off. The condition of the remaining squares of the grid in the coating film was examined, and water resistance was evaluated in accordance with the following criteria. A and B were regarded as passing.

A: 100 squares of the grid of the coating film remained, and no slight edge-peeling occurred at the edge of cuts made by the knife.
B: 100 squares of the grid of the coating film remained, but slight edge-peeling occurred at the edge of cuts made by the knife, with the number of squares of the grid of the coating film having edge-peeling being less than 10.
C: 100 squares of the grid of the coating film remained, but slight edge-peeling occurred at the edge of cuts made by the knife, with the number of squares of the grid of the coating film having edge-peeling being 10 or more.
D: The number of remaining squares of the grid of the coating film is 90 to 99.
E: The number of remaining squares of the grid of the coating film is 89 or less.

(6) Waterproof Adhesion After Accelerated Weathering Test

An accelerated weathering test was performed using the Super Xenon Weather Meter (trade name, Suga Test Instruments Co., Ltd.) specified in JIS B 7754. More specifically, the test plates were irradiated with a xenon arc lamp for 1 hour and 42 minutes, and then exposed to rainfall for 18 minutes. This 2-hour session of irradiation with the lamp was defined as 1 cycle. This cycle was repeated for 4000 hours, after which the same procedures as in the waterproof adhesion test described above were performed. A, B, and C were regarded as passing.

Table 4

| | Example | | | | | | | |
|---|---|---|---|---|---|---|---|---|
| | 1 | 2 | 3 | 4 | 5 | 6 | 7 | 8 |
| Color paint (W) name | W-1 | W-1 | W-1 | W-1 | W-1 | W-1 | W-1 | W-1 |
| Effect pigment dispersion (X) name | X-1 | X-1 | X-1 | X-1 | X-1 | X-1 | X-2 | X-3 |
| Film thickness of effect first base coating film ($\mu$m) | 1 | 1 | 1 | 1 | 1 | 1 | 1 | 1 |
| Transparent colored second base paint (Y) name | Y-1 | Y-1 | Y-1 | Y-1 | Y-2 | Y-2 | Y-1 | Y-1 |
| Film thickness of transparent colored second base coating film ($\mu$m) | 10 | 10 | 10 | 10 | 10 | 10 | 10 | 10 |
| Clear paint (Z) name | Z-1 | Z-2 | Z-3 | Z-4 | Z-1 | Z-2 | Z-1 | Z-1 |
| Chroma C* (15°) in the L*C*h color space diagram | 97 | 97 | 97 | 97 | 120 | 120 | 99 | 90 |
| IV68 | 54.2 8 | 54.0 1 | 54.5 5 | 54.1 2 | 32.1 1 | 32.0 1 | 58.1 2 | 42.5 3 |
| SV68 | 2.59 | 2.61 | 2.57 | 2.60 | 2.67 | 2.71 | 2.65 | 2.31 |
| FF68 | 1.82 | 1.82 | 1.82 | 1.82 | 1.69 | 1.69 | 1.83 | 1.79 |
| Initial waterproof adhesion | A | A | A | A | A | A | A | A |
| Waterproof adhesion after accelerated weathering test | A | A | B | B | A | A | B | A |

Table 4 (continued-1)

| | Example | | | | | | |
|---|---|---|---|---|---|---|---|
| | 9 | 10 | 11 | 12 | 13 | 14 | 15 |
| Color paint (W) name | W-1 | W-1 | W-1 | W-1 | W-1 | W-1 | W-1 |
| Effect pigment dispersion (X) name | X-4 | X-5 | X-6 | X-1 | X-1 | X-1 | X-1 |

(continued)

| | Example | | | | | | |
|---|---|---|---|---|---|---|---|
| | 9 | 10 | 11 | 12 | 13 | 14 | 15 |
| Film thickness of effect first base coating film (μm) | 2 | 2 | 2 | 1 | 1 | 0.3 | 3 |
| Transparent colored second base paint (Y) name | Y-1 | Y-1 | Y-1 | Y-1 | Y-1 | Y-1 | Y-1 |
| Film thickness of transparent colored second base coating film (μm) | 10 | 10 | 10 | 15 | 5 | 10 | 10 |
| Clear paint (Z) name | Z-1 | Z-1 | Z-1 | Z-1 | Z-1 | Z-1 | Z-1 |
| Chroma C* (15°) in the L*C*h color space diagram | 95 | 94 | 88 | 92 | 96 | 89 | 98 |
| IV68 | 50.38 | 47.38 | 34.29 | 45.31 | 61.31 | 40.32 | 58.30 |
| SV68 | 4.27 | 5.35 | 3.38 | 2.34 | 2.79 | 2.31 | 2.66 |
| FF68 | 1.69 | 1.59 | 1.64 | 1.80 | 1.83 | 1.78 | 1.83 |
| Initial waterproof adhesion | A | A | A | A | A | A | A |
| Waterproof adhesion after accelerated weathering test | A | B | A | C | A | A | C |

Table 4 (continued-2)

| | Comparative Example | | | | | | | | | |
|---|---|---|---|---|---|---|---|---|---|---|
| | 1 | 2 | 3 | 4 | 5 | 6 | 7 | 8 | 9 | 10 |
| Color paint (W) name | W-1 | W-1 | W-1 | W-1 | W-1 | W-1 | W-1 | W-1 | W-1 | W-1 |
| Effect pigment dispersion (X) name | X-1 | X-1 | X-1 | X-1 | X-7 | X-8 | X-1 | X-1 | X-9 | X-9 |
| Film thickness of effect first base coating film (μm) | 1 | 1 | 1 | 1 | 1 | 1 | 1 | 1 | 1 | 1 |
| Transparent colored second base paint (Y) name | Y-1 | Y-1 | Y-1 | Y-2 | Y-1 | Y-1 | V-1 | V-2 | Y-1 | Y-2 |
| Film thickness of transparent colored second base coating film (μm) | 10 | 10 | 10 | 10 | 10 | 10 | 10 | 10 | 10 | 10 |
| Clear paint (Z) name | Z-5 | Z-6 | Z-7 | Z-5 | Z-1 | Z-1 | Z-1 | Z-1 | Z-1 | Z-1 |

(continued)

| | Comparative Example | | | | | | | | | |
|---|---|---|---|---|---|---|---|---|---|---|
| | 1 | 2 | 3 | 4 | 5 | 6 | 7 | 8 | 9 | 10 |
| Chroma C* (15°) in the L*C*h color space diagram | 97 | 97 | 95 | 120 | 75 | 92 | 2 | 77 | 71 | 100 |
| IV68 | 54.5 7 | 54.0 6 | 53.0 8 | 32.2 2 | 25.1 4 | 45.6 3 | 346.1 3 | 23.0 4 | 19.2 9 | 17.6 3 |
| SV68 | 2.56 | 2.62 | 2.63 | 2.66 | 2.21 | 5.81 | 12.35 | 2.28 | 5.16 | 4.73 |
| FF68 | 1.82 | 1.82 | 1.81 | 1.69 | 1.68 | 1.55 | 1.86 | 1.64 | 1.16 | 1.15 |
| Initial waterproof adhesion | E | D | C | E | A | B | A | A | A | A |
| Waterproof adhesion after accelerated weathering test | E | E | D | E | A | D | A | B | A | A |

## Claims

1. A method for forming a multilayer coating film, comprising the following steps (1) to (5):

   (1) applying a color paint (W) containing a hydroxy-containing resin (w1) and a color pigment (w2) to a substrate to form a colored coating film;
   (2) applying an effect pigment dispersion (X) to the colored coating film obtained in step (1) to form an effect first base coating film, wherein the effect pigment dispersion (X) contains a hydroxy-containing resin (x1) and an effect pigment (x2), and the content of the effect pigment (x2) in the effect pigment dispersion (X) is within a range of 15 to 80 parts by mass, based on 100 parts by mass of the total solids content in the effect pigment dispersion (X);
   (3) applying a transparent colored second base paint (Y) containing a hydroxy-containing resin (y1) and a color pigment (y2) to the effect first base coating film obtained in step (2) to form a transparent colored second base coating film;
   (4) applying a clear paint (Z) to the transparent colored second base coating film obtained in step (3) to form a clear coating film, wherein the clear paint (Z) contains a hydroxy-containing acrylic resin (z1) and a polyisocyanate compound (z2), and the polyisocyanate compound (z2) contains an aliphatic triisocyanate compound (z2-1) having a molecular weight within a range of 200 to 350 as at least one of the polyisocyanate compound (z2); and
   (5) heating a multilayer coating film containing the effect first base coating film, the transparent colored second base coating film, and the clear coating film formed in steps (2) to (4) to simultaneously cure the multilayer coating film.

2. The method for forming a multilayer coating film according to claim 1, wherein the color paint (W) is an aqueous paint.

3. The method for forming a multilayer coating film according to claim 1 or 2, wherein the color paint (W) further contains a melamine resin and/or a blocked polyisocyanate compound.

4. The method for forming a multilayer coating film according to any one of claims 1 to 3, wherein the effect pigment dispersion (X) is an aqueous paint.

5. The method for forming a multilayer coating film according to claim 4, wherein in the effect pigment dispersion (X), the hydroxy-containing resin (x1) contains a water-dispersible hydroxy-containing acrylic resin (x111).

6. The method for forming a multilayer coating film according to any one of claims 1 to 5, wherein the effect pigment (x2) contains a vapor-deposition aluminum flake pigment, and the content of the vapor-deposition aluminum flake pigment is within a range of 15 to 55 parts by mass, based on 100 parts by mass of the total solids content in the effect pigment dispersion (X).

7. The method for forming a multilayer coating film according to any one of claims 1 to 5, wherein the effect pigment (x2) contains an aluminum flake pigment, and the content of the aluminum flake pigment is within a range of 45 to 80 parts by mass, based on 100 parts by mass of the total solids content in the effect pigment dispersion (X).

8. The method for forming a multilayer coating film according to any one of claims 1 to 7, wherein the transparent colored second base paint (Y) is an aqueous paint.

9. The method for forming a multilayer coating film according to any one of claims 1 to 8, wherein the transparent colored second base paint (Y) further contains a melamine resin and/or a blocked polyisocyanate compound.

10. The method for forming a multilayer coating film according to any one of claims 1 to 9, wherein in the clear paint (Z), the equivalent ratio (NCO/OH) of the total mol of the isocyanate groups in the polyisocyanate compound (z2) to the total mol of the hydroxy groups in the hydroxy-containing acrylic resin (z1) is within a range of 1.1 to 2.5.

11. The method for forming a multilayer coating film according to any one of claims 1 to 10, wherein the effect first base coating film has a film thickness within a range of 0.02 to 7 $\mu$m.

12. The method for forming a multilayer coating film according to any one of claims 1 to 11, wherein the transparent colored second base coating film has a film thickness within a range of 3 to 30 $\mu$m.

13. The method for forming a multilayer coating film according to any one of claims 1 to 12, wherein in step (2), the effect pigment dispersion (X) is applied to the heat-cured colored coating film.

14. The method for forming a multilayer coating film according to any one of claims 1 to 12, wherein in step (2), the effect pigment dispersion (X) is applied to the uncured colored coating film, and in step (5), the colored coating film, effect first base coating film, transparent colored second base coating film, and clear coating film formed in steps (1) to (4) are simultaneously heated to cure a multilayer coating film containing these four coating films all at once.

**Patentansprüche**

1. Verfahren zum Bilden eines Mehrschichtbeschichtungsfilms, umfassend die folgenden Schritte (1) bis (5):

(1) das Aufbringen eines Farblacks (W), enthaltend ein hydroxyhaltiges Harz (w1) und ein Farbpigment (w2), auf ein Substrat, um einen farbigen Beschichtungsfilm zu bilden;
(2) das Aufbringen einer Effektpigmentdispersion (X) auf den in Schritt (1) erhaltenen farbigen Beschichtungsfilm, um einen ersten Effektbasisbeschichtungsfilm zu bilden, wobei die Effektpigmentdispersion (X) ein hydroxyhaltiges Harz (x1) und ein Effektpigment (x2) enthält, und der Gehalt des Effektpigments (x2) in der Effektpigmentdispersion (X) in einem Bereich von 15 bis 80 Massenteilen, bezogen auf 100 Massenteile des Gesamtfeststoffgehalts in der Effektpigmentdispersion (X), liegt;
(3) das Aufbringen eines transparenten, farbigen zweiten Basislacks (Y), enthaltend ein hydroxyhaltiges Harz (y1) und ein Farbpigment (y2), auf den in Schritt (2) erhaltenen ersten Effektbasisbeschichtungsfilm, um einen transparenten, farbigen zweiten Basisbeschichtungsfilm zu bilden;
(4) das Aufbringen eines Klarlacks (Z) auf den in Schritt (3) erhaltenen transparenten, farbigen zweiten Basisbeschichtungsfilm, um einen Klarbeschichtungsfilm zu bilden, wobei der Klarlack (Z) ein hydroxyhaltiges Acrylharz (z1) und eine Polyisocyanatverbindung (z2) enthält, und die Polyisocyanatverbindung (z2) eine aliphatische Triisocyanatverbindung (z2-1) mit einem Molekulargewicht in einem Bereich von 200 bis 350 als mindestens eine der Polyisocyanatverbindungen (z2) enthält; und
(5) das Erwärmen eines Mehrschichtbeschichtungsfilms, der den ersten Effektbasisbeschichtungsfilm, den transparenten, farbigen zweiten Basisbeschichtungsfilm und den Klarbeschichtungsfilm, gebildet in den Schritten (2) bis (4), enthält, um den Mehrschichtbeschichtungsfilm gleichzeitig auszuhärten.

2. Verfahren zum Bilden eines Mehrschichtbeschichtungsfilms nach Anspruch 1, wobei der Farblack (W) ein wässriger Lack ist.

3. Verfahren zum Bilden eines Mehrschichtbeschichtungsfilms nach Anspruch 1 oder 2, wobei der Farblack (W) weiter ein Melaminharz und/oder eine blockierte Polyisocyanatverbindung enthält.

4. Verfahren zum Bilden eines Mehrschichtbeschichtungsfilms nach einem der Ansprüche 1 bis 3, wobei die Effektpigmentdispersion (X) ein wässriger Lack ist.

5. Verfahren zum Bilden eines Mehrschichtbeschichtungsfilms nach Anspruch 4, wobei das hydroxyhaltige Harz (x1) in der Effektpigmentdispersion (X) ein wasserdispergierbares hydroxyhaltiges Acrylharz (x111) enthält.

6. Verfahren zum Bilden eines Mehrschichtbeschichtungsfilms nach einem der Ansprüche 1 bis 5, wobei das Effektpigment (x2) ein Dampfabscheidungsaluminiumflockenpigment enthält, und der Gehalt des Dampfabscheidungsaluminiumflockenpigments in einem Bereich von 15 bis 55 Massenteilen, bezogen auf 100 Massenteile des Gesamtfeststoffgehalts in der Effektpigmentdispersion (X), liegt.

7. Verfahren zum Bilden eines Mehrschichtbeschichtungsfilms nach einem der Ansprüche 1 bis 5, wobei das Effektpigment (x2) ein Aluminiumflockenpigment enthält, und der Gehalt des Aluminiumflockenpigments in einem Bereichs von 45 bis 80 Massenteilen, bezogen auf 100 Massenteile des Gesamtfeststoffgehalts in der Effektpigmentdispersion (X), liegt.

8. Verfahren zum Bilden eines Mehrschichtbeschichtungsfilms nach einem der Ansprüche 1 bis 7, wobei der transparente, farbige zweite Basislack (Y) ein wässriger Lack ist.

9. Verfahren zum Bilden eines Mehrschichtbeschichtungsfilms nach einem der Ansprüche 1 bis 8, wobei der transparente, farbige zweite Basislack (Y) weiter ein Melaminharz und/oder eine blockierte Polyisocyanatverbindung enthält.

10. Verfahren zum Bilden eines Mehrschichtbeschichtungsfilms nach einem der Ansprüche 1 bis 9, wobei in dem Klarlack (Z) das Äquivalentverhältnis (NCO/OH) der Gesamtmolzahl der Isocyanatgruppen in der Polyisocyanatverbindung (z2) zu der Gesamtmolzahl der Hydroxygruppen in dem hydroxyhaltigen Acrylharz (z1) in einem Bereich von 1,1 bis 2,5 liegt.

11. Verfahren zum Bilden eines Mehrschichtbeschichtungsfilms nach einem der Ansprüche 1 bis 10, wobei der erste Effektbasisbeschichtungsfilm eine Filmdicke in einem Bereich von 0,02 bis 7 $\mu$m aufweist.

12. Verfahren zum Bilden eines Mehrschichtbeschichtungsfilms nach einem der Ansprüche 1 bis 11, wobei der transparente, farbige zweite Basisbeschichtungsfilm eine Filmdicke in einem Bereich von 3 bis 30 $\mu$m aufweist.

13. Verfahren zum Bilden eines Mehrschichtbeschichtungsfilms nach einem der Ansprüche 1 bis 12, wobei in Schritt (2) die Effektpigmentdispersion (X) auf den wärmegehärteten farbigen Beschichtungsfilm aufgetragen wird.

14. Verfahren zum Bilden eines Mehrschichtbeschichtungsfilms nach einem der Ansprüche 1 bis 12, wobei in Schritt (2) die Effektpigmentdispersion (X) auf den ungehärteten farbigen Beschichtungsfilm aufgetragen wird, und in Schritt (5) der farbige Beschichtungsfilm, der erste Effektbasisbeschichtungsfilm, der transparente, farbige zweite Basisbeschichtungsfilm und der Klarbeschichtungsfilm, gebildet in den Schritten (1) bis (4), gleichzeitig erwärmt werden, um einen Mehrschichtbeschichtungsfilm, der diese vier Beschichtungsfilme enthält, alle auf einmal gleichzeitig auszuhärten.

## Revendications

1. Procédé de formation d'un film d'enrobage multicouche, comprenant les étapes suivantes (1) à (5) :

(1) appliquer une peinture de couleur (W) contenant une résine contenant hydroxy (w1) et un pigment de couleur (w2) à un substrat pour former un film d'enrobage coloré ;
(2) appliquer une dispersion à pigment à effet (X) au film d'enrobage coloré obtenu à l'étape (1) pour former un premier film d'enrobage de base à effet, dans lequel la dispersion à pigment à effet (X) contient une résine contenant hydroxy (x1) et un pigment à effet (x2), et la teneur en le pigment à effet (x2) dans la dispersion à pigment à effet (X) est au sein d'une plage de 15 à 80 parties en masse, basée sur 100 parties en masse de la teneur en solides totale dans la dispersion à pigment à effet (X) ;

(3) appliquer une seconde peinture base colorée transparente (Y) contenant une résine contenant hydroxy (y1) et un pigment de couleur (y2) au premier film d'enrobage de base à effet obtenu à l'étape (2) pour former un second film d'enrobage de base coloré transparent ;

(4) appliquer une peinture incolore (Z) au second film d'enrobage de base coloré transparent obtenu à l'étape (3) pour former un film d'enrobage incolore, dans lequel la peinture incolore (Z) contient une résine acrylique contenant hydroxy (z1) et un composé de polyisocyanate (z2), et le composé de polyisocyanate (z2) contient un composé de triisocyanate aliphatique (z2-1) ayant un poids moléculaire au sein d'une plage de 200 à 350 en tant qu'au moins un du composé de polyisocyanate (z2) ; et

et

(5) chauffer un film d'enrobage multicouche contenant le premier film d'enrobage de base à effet, le second film d'enrobage de base coloré transparent et le film d'enrobage incolore formés aux étapes (2) à (4) pour durcir simultanément le film d'enrobage multicouche.

2. Procédé de formation d'un film d'enrobage multicouche selon la revendication 1, dans lequel la peinture de couleur (W) est une peinture aqueuse.

3. Procédé de formation d'un film d'enrobage multicouche selon la revendication 1 ou 2, dans lequel la peinture de couleur (W) contient en outre une résine de mélamine et/ou un composé de polyisocyanate bloqué.

4. Procédé de formation d'un film d'enrobage multicouche selon l'une quelconque des revendications 1 à 3, dans lequel la dispersion à pigment à effet (X) est une peinture aqueuse.

5. Procédé de formation d'un film d'enrobage multicouche selon la revendication 4, dans lequel dans la dispersion à pigment à effet (X), la résine contenant hydroxy (x1) contient une résine acrylique contenant hydroxy dispersible dans l'eau (x111).

6. Procédé de formation d'un film d'enrobage multicouche selon l'une quelconque des revendications 1 à 5, dans lequel le pigment à effet (x2) contient un pigment de flocon d'aluminium à dépôt par évaporation sous vide, et la teneur en le pigment de flocon d'aluminium à dépôt par évaporation sous vide est au sein d'une plage de 15 à 55 parties en masse, basée sur 100 parties en masse de la teneur en solides totale dans la dispersion à pigment à effet (X).

7. Procédé de formation d'un film d'enrobage multicouche selon l'une quelconque des revendications 1 à 5, dans lequel le pigment à effet (x2) contient un pigment de flocon d'aluminium, et la teneur en le pigment de flocon d'aluminium est au sein d'une plage de 45 à 80 parties en masse, basée sur 100 parties en masse de la teneur en solides totale dans la dispersion à pigment à effet (X).

8. Procédé de formation d'un film d'enrobage multicouche selon l'une quelconque des revendications 1 à 7, dans lequel la seconde peinture de base colorée transparente (Y) est une peinture aqueuse.

9. Procédé de formation d'un film d'enrobage multicouche selon l'une quelconque des revendications 1 à 8, dans lequel la seconde peinture de base colorée transparente (Y) contient en outre une résine de mélamine et/ou un composé de polyisocyanate bloqué.

10. Procédé de formation d'un film d'enrobage multicouche selon l'une quelconque des revendications 1 à 9, dans lequel dans la peinture incolore (Z), le rapport équivalent (NCO/OH) de la mole totale des groupes isocyanate dans le composé de polyisocyanate (z2) sur la mole totale des groupes hydroxy dans la résine acrylique contenant hydroxy (z1) est au sein d'une plage de 1,1 à 2,5.

11. Procédé de formation d'un film d'enrobage multicouche selon l'une quelconque des revendications 1 à 10, dans lequel le premier film d'enrobage de base à effet a une épaisseur de film au sein d'une plage de 0,02 à 7 $\mu$m.

12. Procédé de formation d'un film d'enrobage multicouche selon l'une quelconque des revendications 1 à 11, dans lequel le second film d'enrobage de base coloré transparent a une épaisseur de film au sein d'une plage de 3 à 30 $\mu$m.

13. Procédé de formation d'un film d'enrobage multicouche selon l'une quelconque des revendications 1 à 12, dans lequel à l'étape (2), la dispersion à pigment à effet (X) est appliquée au film d'enrobage coloré thermodurci.

14. Procédé de formation d'un film d'enrobage multicouche selon l'une quelconque des revendications 1 à 12, dans lequel à l'étape (2), la dispersion à pigment à effet (X) est appliquée au film d'enrobage coloré non durci, et à l'étape (5), le film d'enrobage coloré, le premier film d'enrobage de base à effet, le second film d'enrobage de base coloré transparent et le film d'enrobage incolore formés aux étapes (1) à (4) sont chauffés simultanément pour durcir un film d'enrobage multicouche contenant ces quatre films d'enrobage en une seule fois.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2007167720 A

**Non-patent literature cited in the description**

• Polymer Handbook, vol. III, 139-179